(19) Europäisches Patentamt / European Patent Office / Office européen des brevets

(11) **EP 2 857 835 B1**

(12) **EUROPÄISCHE PATENTSCHRIFT**

(45) Veröffentlichungstag und Bekanntmachung des Hinweises auf die Patenterteilung:
**20.01.2021 Patentblatt 2021/03**

(51) Int Cl.:
**G01N 29/07** *(2006.01)*     **G01N 29/44** *(2006.01)*
**G01S 15/89** *(2006.01)*

(21) Anmeldenummer: **14186546.9**

(22) Anmeldetag: **26.09.2014**

(54) **Verfahren zum akustischen Prüfen eines zu untersuchenden Objekts, akustisches Prüfsystem zum Prüfen eines Objekts und Programm**

Method for acoustic testing of an object to be examined, acoustic testing system for testing an object and program

Procédé de contrôle acoustique d'un objet à examiner, système acoustique de contrôle d'un objet et programme

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **02.10.2013 DE 102013110969**

(43) Veröffentlichungstag der Anmeldung:
**08.04.2015 Patentblatt 2015/15**

(73) Patentinhaber: **Fraunhofer-Gesellschaft zur Förderung der angewandten Forschung e.V.
80686 München (DE)**

(72) Erfinder:
• **Dobmann, Gerd
66125 Saarbrücken (DE)**
• **Pudovikov, Sergey
66123 Saarbrücken (DE)**

(74) Vertreter: **2SPL Patentanwälte PartG mbB
Postfach 15 17 23
80050 München (DE)**

(56) Entgegenhaltungen:
**US-A1- 2009 083 004**

• **LEUTENEGGER T ET AL: "Non-destructive testing of tubes using a time reverse numerical simulation (TRNS) method", ULTRASONICS, IPC SCIENCE AND TECHNOLOGY PRESS LTD. GUILDFORD, GB, Bd. 41, Nr. 10, 1. Mai 2004 (2004-05-01), Seiten 811-822, XP004505105, ISSN: 0041-624X, DOI: 10.1016/J.ULTRAS.2003.12.046**
• **C. Boller ET AL: "Quantitative ultrasonic testing of acoustically anisotropic materials with verification on austenitic and dissimilar weld joints", AIP CONFERENCE PROCEEDINGS, 1 January 2012 (2012-01-01), pages 881-888, XP055467952, NEW YORK, US ISSN: 0094-243X, DOI: 10.1063/1.4716317**

**Beschreibung**

**Technisches Gebiet**

Ausführungsbeispiele beziehen sich auf ein Verfahren zum Prüfen eines zu untersuchenden Werkstücks, ein Prüfsystem zum Prüfen eines Werkstücks und ein Programm mit einem Programmcode zum Durchführen eines entsprechenden Verfahrens, wie diese beispielsweise zur zerstörungsfreien Bestimmung von unbekannten elastischen Eigenschaften und Strukturen eines anisotropen inhomogenen Objekts verwendet werden können.

**Hintergrund**

In vielen Bereichen der Technik besteht die Herausforderung, ein Objekt auf seine Qualität hin zu untersuchen, ohne dass dieses dabei beschädigt wird. Beispiele kommen so beispielsweise aus den Bereichen des Kraftfahrzeugbaus, des Flugzeugbaus, des Schiffsbaus, der Gebäudetechnik, aber auch aus dem Gebiet der Reaktorsicherheit, um nur einige Beispiele zu nennen. Diese auch als zerstörungsfreie Prüfverfahren bezeichneten Verfahren ermöglichen es nun, ein zu untersuchendes Objekt auf mögliche, gegebenenfalls nicht sichtbare Schäden im Inneren zu untersuchen, ohne dass das betreffende Objekt selbst seine Gebrauchseignung verliert.

Hierbei ist bei einem Versagen eines solchen Objekts häufig mit großen Schäden an der Gesundheit und dem Leben von Menschen, aber ebenso hohe Sachschäden und gegebenenfalls hohe Umweltschäden zu rechnen. So kann beispielsweise bei einem Versagen einer Verbindung im Brückenbau die betreffende Brücke gegebenenfalls einstürzen und zu einem großen Personen- und Sachschaden führen.

Im Falle der Reaktorsicherheit können beispielsweise bei einem Versagen einer Schweißnaht im Bereich eines Kühlkreislaufs radioaktiv kontaminierte Substanzen austreten und zu einem Personenschaden, einem Sachschaden und gegebenenfalls zu einem sehr schwerwiegenden Umweltschaden führen.

Akustische Prüfmethoden, welche unter der Ausnützung der Wechselwirkung mit Ultraschallwellen und anderen Schallwellen arbeiten, sind neben der Durchstrahlungsprüfung beispielsweise mittels Röntgenverfahren eine der wenigen zerstörungsfreien Verfahren zur Prüfung des inneren Volumens von Werkstoffen und Objekten. Da die Durchdringungstiefe von Röntgenstrahlen durch die Dicke des durchstrahlten Objekts typischerweise beschränkt ist, können in vielen Fällen beispielsweise bei der Prüfung von dickwandigen Bauteilen nur akustische Prüfverfahren eingesetzt werden.

Die Veröffentlichung "Quantitative Ultrasonic Testing of Acoustically Anisotropic Materials With Verification on Austenitic and Dissimilar Weld Joints", C. Boller et al., AIP Conference Proceedings, Vol. 1430, 2012, Seite 881, bezieht sich auf ein Verfahren zur zerstörungsfreien Prüfung austenitischer Schweißverbindungen, bei dem ein Referenzkörper mit vergleichbaren akustischen Eigenschaften zur Kalibrierung eingesetzt wird. Die WO 2013/023 987 A1 bezieht sich auf ein über Luft angekoppeltes, kontaktfreies Ultraschallverfahren zur nichtdestruktiven Bestimmung von Defekten in laminierten Strukturen, bei der ebenfalls zur Kalibration eine defektfreie Kalibrationsprobe benötigt wird.

Die US 2009/0083004 A1 bezieht sich auf ein virtuelles akustisches Zeitumkehrverfahren zur strukturellen Überprüfung von Komponenten eines Flugzeugs. Bei diesem Verfahren werden zeitumgekehrte Antwortsignale in ein funktionales Modell eingespeist, das eine Transferfunktion beinhaltet, die ihrerseits wieder aus Verzögerungskoeffizienten und Gewichtungskoeffizienten beinhaltet. Während der Kalibration werden diese auf Basis eines Breitbandeingangssignals über Kreuzkorrelationen und der Verringerung des Fehlers bestimmt, sodass Veränderungen erkannt werden können, die beispielsweise durch Beschädigung, Korrosion, Degradation, Delamination, Risse, einer Schwächung von Bereichen oder anderer Schäden hervorgerufen werden können.

**Zusammenfassung**

So besteht grundsätzlich ein Bedarf daran, ein solches Verfahren möglichst einfach, sicher, schnell und genau auf ein bestimmtes zu untersuchendes Objekt anwenden zu können. Es besteht so ein Bedarf daran, einen Kompromiss aus Sicherheit, Genauigkeit, Schnelligkeit und Einfachheit der Anwendbarkeit eines Verfahrens zum Prüfen eines zu untersuchenden Objektes zu verbessern.

Diesem Bedarf tragen ein Verfahren gemäß Patentanspruch 1, ein Prüfsystem gemäß Patentanspruch 11 und ein Programm mit einem Programmcode zum Durchführen eines solchen Verfahrens gemäß Patentanspruch 13 Rechnung.

Ausführungsbeispielen liegt so die Erkenntnis zugrunde, dass ein Kompromiss hinsichtlich Genauigkeit, Sicherheit der Anwendung, Einfachheit der Anwendung und Schnelligkeit der Ausführung eines entsprechenden Verfahrens gemäß einem Ausführungsbeispiel dadurch verbessert werden kann, dass auf Basis eines Modells des Objekts, welches gerade die räumlich veränderlichen elastischen Eigenschaften des Objektes umfasst, mittels einer Rückprojektion der erfassten Zeitsignale, einer Bewertung der Rückprojektion und einer entsprechenden Anpassung des Modells des Objekts basierend auf der Bewertung der Rückprojektion verwendet wird. So kann beispielsweise auch ein komplexeres, beispielsweise inhomogenes und/oder anisotropes Objekt mithilfe eines solchen Verfahrens unmittelbar, also beispielsweise referenzkörperfrei, untersucht werden. Ein Ausführungsbeispiel eines Verfahrens kann so beispielsweise optional ein Bereitstellen des zu untersuchenden Objekts umfassen.

Auch kann durch die Anpassung des Modells des zu untersuchenden Objekts die Genauigkeit des Ergebnisses gegebenenfalls gesteigert werden. Nicht zuletzt durch die unmittelbare Anwendung an dem zu untersuchenden Objekt, ohne dass ein Referenzkörper zu verwenden ist, kann darüber hinaus das Verfahren auch einfacher eingesetzt werden.

Optional kann bei einem Verfahren gemäß einem Ausführungsbeispiel das Objekt einen zu untersuchenden Bereich aufweisen, wobei der zu untersuchende Bereich entlang einer Richtung an der Oberfläche des Objekts zwischen dem Sender und der Mehrzahl von Empfängern angeordnet ist. Hierdurch kann es gegebenenfalls möglich sein, den zu untersuchenden Bereich besser in die Ausbreitungswege zwischen Sender und der Mehrzahl der Empfänger anzuordnen, um so eine genauere Bestimmung des zu untersuchenden Bereichs zu ermöglichen. So kann hierdurch gegebenenfalls auch eine bessere Anpassung des Modells des Objekts erfolgen.

Ergänzend oder alternativ kann ein Verfahren gemäß einem Ausführungsbeispiel ein iteratives Rückprojizieren, Bewerten und Anpassen des Modells umfassen, wenn die Bewertung eine vorbestimmte Bedingung nicht erfüllt. Hierdurch kann es möglich sein, durch das iterative Wiederholen der genannten Prozesse die Bestimmung der Eigenschaften des zu untersuchenden Objekts weiter zu verbessern.

Die vorbestimmte Bedingung kann beispielsweise optional dann erfüllt sein, wenn eine bestimmte Anzahl von Iterationen noch nicht erreicht wurde und/oder wenn durch eine Veränderung des Modells keine oder nur eine unbedeutende, beispielsweise unterhalb einer vorbestimmten Schwelle liegende Verbesserung des Ergebnisses möglich ist.

Ergänzend kann bei einem Verfahren gemäß einem Ausführungsbeispiel das Bewerten der Rückprojektionen und Vergleichen einer Position einer bekannten Außenkante und/oder einer bekannten Außenfläche des Objekts mit einer Position der Außenkante bzw. der Außenfläche bestimmt basierend auf den rückprojizierten Zeitsignalen umfassen. So kann es gegebenenfalls auch möglich sein, eine Bewertung vorzunehmen, wenn die Dicke oder eine andere Lage der Außenkante bzw. der Außenfläche des Objekts bekannt ist. Ergänzend oder alternativ können andere Konstruktionselemente und/oder Strukturen des Objekts benutzt werden, deren Geometrie und/oder Lage bekannt sind, wie beispielsweise Löcher, Nuten, Übergänge, Bohrungen, Stöße, Krümmungen usw., und von denen die akustische Wellen während des aktuellen Prüfvorgangs reflektieren und so empfangen und interpretiert werden können.

Ergänzend kann bei einem Verfahren gemäß einem Ausführungsbeispiel das Bewerten der Rückprojektion ebenso ein Bewerten einer Amplitude und/oder einer Schärfe umfassen. So kann durch die Höhe der bei der Rückprojektion auftretenden Amplitude des summierten rückprojizierten Signals bzw. ihrer räumlichen Verteilung (Schärfe) gegebenenfalls auch auf die Rückprojektion und ihre Qualität geschlossen werden.

So kann ergänzend bei einem Verfahren gemäß einem Ausführungsbeispiel das Bewerten der Rückprojektion basierend auf einer Funktion erfolgen, wobei die Funktion auf einer Abweichung einer Position bestimmt basierend auf den rückprojizierten Zeitsignalen von einer bekannten Position, einer Amplitude an der Position bestimmt basierend auf den rückprojizierten Zeitsignalen oder in einer Umgebung der Position bestimmt basierend auf den rückprojizierten Zeitsignalen und/oder einer Unschärfe in der Umgebung der Position basiert. Hierdurch kann es möglich sein, eine einfach zu implementierendes, numerisches Kriterium für die Qualität der Rückprojektion zu schaffen. Eine Position bestimmt basierend auf den rückprojizierten Zeitsignalen wird auch kurz als rückprojizierte oder bestimmte Position bezeichnet.

So kann ergänzend bei einem Verfahren gemäß einem Ausführungsbeispiel das Bewerten der Rückprojektion basierend auf eine Funktion $f_{DS} = G_1 \cdot L + G_2 / A + G_3 \cdot U$ mit einer Abweichung $L$ einer rückprojizierten Position von einer bekannten Position, einer Amplitude $A$ an der rückprojizierten Position oder in einer Umgebung der rückprojizierten Position, einer Unschärfe der Umgebung der rückprojizierten Position und Gewichtskoeffizienten $G_1$, $G_2$ und $G_3$ erfolgt. Hierdurch kann es möglich sein, mit vergleichsweise einfachen Mitteln ein numerisches Kriterium für die Qualität der Rückprojektion zu implementieren.

Optional kann bei einem solchen Verfahren gemäß einem Ausführungsbeispiel das Bewerten der Rückprojektion auf Basis von Amplitudenwerten in der Umgebung der rückprojizierten Position erfolgen, wobei nur Amplitudenwerte berücksichtigt werden, die wenigstens einem Amplitudenschwellenwert entsprechen. Hierdurch kann es möglich sein, eine Genauigkeit dadurch weiter zu erhöhen, indem Beiträge, die gegebenenfalls nur auf Artefakte zurückzuführen sind, unterdrückt bzw. nicht berücksichtigt werden.

Ergänzend oder alternativ kann bei einem Verfahren gemäß einem Ausführungsbeispiel das Rückprojizieren der Zeitsignale ein Berücksichtigen von Wellenumwandlungseffekten umfassen. Hierdurch kann es gegebenenfalls möglich sein, die Genauigkeit weiter zu steigern.

Ergänzend oder alternativ kann bei einem Verfahren gemäß einem Ausführungsbeispiel das Modell auf einem diskreten Raster auf Basis von Rasterpunkten basieren. Darüber hinaus kann das Modell auch Bereiche mit mehr als einem Rasterpunkt des diskreten Rasters umfassen. Hierdurch kann es gegebenenfalls möglich sein, eine Berechnung zu vereinfachen und so das Verfahren weiter zu beschleunigen.

Ergänzend oder alternativ kann bei einem Verfahren gemäß einem Ausführungsbeispiel das Anpassen des Modells des Objekts auf Basis eines Simplex-Verfahrens, eines Gradienten-Verfahrens und/oder auf Basis eines Neuronetzes erfolgen. Hierdurch kann es möglich sein, das Anpassen zu beschleunigen, umso schneller zu einem besseren und damit genaueren Ergebnis zu gelangen.

Ergänzend oder alternativ kann bei einem Verfahren gemäß einem Ausführungsbeispiel eine Mehrzahl von Sätzen von akustisch erfassten Zeitsignalen bereitgestellt werden, wobei jeder Satz von Zeitsignalen wenigstens einer unterschiedlichen gemeinsamen Position des Senders bezogen auf die Positionen der Mehrzahl von Empfängern entspricht, und bei denen das Rückprojizieren das Rückprojizieren der Zeitsignale von den Sätzen der Zeitsignale von den jeweiligen Positionen der Empfänger umfasst. Hierdurch kann es gegebenenfalls möglich sein, auf Basis mehrerer erfolgter Messzyklen, bei denen jeweils ein Satz von Zeitsignalen bereitgestellt wird, ein größeres Gebiet des zu untersuchenden Objekts zu überprüfen bzw. durch eine entsprechende räumliche Verlagerung von Sender zu den Empfängern eine höhere Genauigkeit zu erzielen. Hierbei können sowohl der Empfänger wie auch die Empfänger unabhängig voneinander zwischen den Aufnahmen der unterschiedlichen Sätze von Zeitsignalen bewegt werden.

Ergänzend oder alternativ kann bei dem Verfahren gemäß einem Ausführungsbeispiel das Bereitstellen des wenigstens einen Satzes von akustisch erfassten Zeitsignalen das Erfassen der akustischen Zeitsignale auf ein Aussenden eines Signals durch den Sender hin umfassen.

Optional kann bei einem Prüfsystem gemäß einem Ausführungsbeispiel die Mehrzahl von Empfängern an einem ersten Prüfkopf angeordnet sein, während der Sender an einem zweiten Prüfkopf angeordnet ist. Die Prüfköpfe können hierbei ausgebildet sein, um auf der Oberfläche des Objekts angeordnet zu werden.

Bei einem Ausführungsbeispiel eines Verfahrens können die zuvor genannten Verfahrensschritte in der angegebenen, jedoch auch gegebenenfalls in einer abweichenden Reihenfolge durchgeführt werden. So können gegebenenfalls einzelne Verfahrensschritte simultan, zumindest jedoch auch zeitlich überlappend erfolgen, sofern sich aus deren Beschreibung oder dem technischen Zusammenhang nichts anderes ergibt.

Eine mechanische Kopplung zweier Komponenten umfasst sowohl eine unmittelbare, wie auch eine mittelbare Kopplung.

Elektrische oder andere Komponenten sind miteinander mittelbar über eine weitere Komponente oder unmittelbar miteinander derart gekoppelt, dass diese einen informationstragenden Signalaustausch zwischen den betreffenden Komponenten ermöglichen. So kann die entsprechende Kopplung abschnittsweise oder vollständig beispielsweise elektrisch, optisch, magnetisch oder mittels Funktechnik implementiert und umgesetzt sein. Die Signale können hierbei hinsichtlich ihres Wertebereichs sowie ihres zeitlichen Verlaufs kontinuierlich, diskret oder, beispielsweise abschnittsweise, beide Arten umfassen. Es kann sich so beispielsweise um analoge oder digitale Signale handeln. Ein Signalaustausch kann darüber hinaus auch über ein Schreiben bzw. Lesen von Daten in Register oder andere Speicherstellen erfolgen.

## Figurenkurzbeschreibung

Ausführungsbeispiele werden nachfolgend bezugnehmend auf die beiliegenden Figuren näher erläutert. Es zeigen:

Fig. 1 zeigt ein Flussdiagramm eines Verfahrens zum Prüfen eines zu untersuchenden Objekts;

Fig. 2 zeigt ein Blockdiagramm eines Prüfsystems gemäß einem Ausführungsbeispiel zum Prüfen eines Objekts;

Fig. 3 zeigt eine schematische Darstellung zur Illustration zur Erläuterung der tomographischen Rekonstruktion;

Fig. 4 illustriert eine Erstellung eines Modells einer inhomogenen anisotropen Schweißverbindung;

Fig. 5 zeigt eine erste Messanordnung gemäß einem Ausführungsbeispiel, bei der der Sender auf einer den Empfängern abgewandten Seite des Objekts angeordnet ist;

Fig. 6 zeigt eine schematische Darstellung einer Messanordnung gemäß einem Ausführungsbeispiel, bei der der Sender und die Empfänger auf einer gleichen Oberfläche des Objekts angeordnet sind;

Fig. 7a zeigt einen Vergleich von Soll-Position und Ist-Position zu einem frühen Zeitpunkt einer Iteration;

Fig. 7b zeigt eine Intensitätsverteilung zu einem frühen Zeitpunkt der Iteration;

Fig. 7c zeigt einen Vergleich von Soll-Position und Ist-Position zu einem späteren Zeitpunkt der Iteration;

Fig. 7d zeigt eine Intensitätsverteilung zu einem späteren Zeitpunkt der Iteration;

Fig. 8 illustriert anhand von sechs Teilabbildungen eine Verbesserung des Modells des Objekts;

Fig. 9 zeigt ein Flussdiagramm eines Ausführungsbeispiels eines Verfahrens zum Prüfen eines zu untersuchenden Objekts;

Fig. 10 illustriert zwei unterschiedliche Positionen der Empfänger auf der Oberfläche des Objekts; und

Fig. 11 illustriert eine konventionelle Herangehensweise mit einem gezielten Reflektor in der Schweißnaht.

## Beschreibung

Verschiedene Ausführungsbeispiele werden nun ausführlicher unter Bezugnahme auf die beiliegenden Zeichnungen beschrieben, in denen einige Ausführungsbeispiele dargestellt sind. In den Figuren können die Dickenabmessungen von Linien, Schichten und/oder Regionen um der Deutlichkeit Willen übertrieben dargestellt sein.

Bei der nachfolgenden Beschreibung der beigefügten Figuren, die lediglich einige exemplarische Ausführungsbeispiele zeigen, können gleiche Bezugszeichen gleiche oder vergleichbare Komponenten bezeichnen. Ferner können zusammenfassende Bezugszeichen für Komponenten und Objekte verwendet werden, die mehrfach in einem Ausführungsbeispiel oder in einer Zeichnung auftreten, jedoch hinsichtlich eines oder mehrerer Merkmale gemeinsam beschrieben werden. Komponenten oder Objekte, die mit gleichen oder zusammenfassenden Bezugszeichen beschrieben werden, können hinsichtlich einzelner, mehrerer oder aller Merkmale, beispielsweise ihrer Dimensionierungen, gleich, jedoch gegebenenfalls auch unterschiedlich ausgeführt sein, sofern sich aus der Beschreibung nicht etwas anderes explizit oder implizit ergibt.

Obwohl Ausführungsbeispiele auf verschiedene Weise modifiziert und abgeändert werden können, sind Ausführungsbeispiele in den Figuren als Beispiele dargestellt und werden hierin ausführlich beschrieben. Es sei jedoch klargestellt, dass nicht beabsichtigt ist, Ausführungsbeispiele auf die jeweils offenbarten Formen zu beschränken, sondern dass Ausführungsbeispiele vielmehr sämtliche funktionale und/oder strukturelle Modifikationen, Äquivalente und Alternativen, die im Bereich der Erfindung liegen, abdecken sollen. Gleiche Bezugszeichen bezeichnen in der gesamten Figurenbeschreibung gleiche oder ähnliche Elemente.

Wie eingangs bereits erörtert wurde, besteht in vielen technischen Gebieten ein Bedarf daran, eine möglichst schnelle, einfache und zuverlässig einsetzbare Prüfmethode zur Verfügung zu haben, welche eine zerstörungsfreie Untersuchung von Objekten, die auch als Prüfobjekte bezeichnet werden, zu ermöglichen. Wie die nachfolgende Beschreibung noch zeigen wird, umfassen Ausführungsbeispiele so beispielsweise ein zerstörungsfreies Ultraschall-Prüfverfahren (ZfP), bei welchem eine Verbesserung der Zuverlässigkeit erzielbar sein kann. Ein solches Verfahren gemäß einem Ausführungsbeispiel kann beispielsweise auf anisotrope inhomogene Materialien und Objekte angewendet werden, wie austenitischen und nickelbasierten Schweißverbindungen und Mischverbindungen auf ihrer Basis.

Ausführungsbeispielen liegt das Prinzip der akustischen Tomographie zugrunde. Hierbei kann beispielsweise eine Modellierung und Visualisierung der Ausbreitung von elastischen Wellen durch das Objekt bzw. den Prüfgegenstand herangezogen werden. Ebenso kann es gegebenenfalls als Nachweis und zur Bewertung von vorhandenen Materialungänzen, also beispielsweise Werkstofffehlern, sowie zur Ermittlung von bruchmechanisch relevanten Größen, wie der Festigkeit, der Zähigkeit und anderen Größen, durch Bestimmung der Struktur und elastischen Eigenschaften des Objekts genutzt werden.

Neben Durchstrahlungstechniken, zu denen insbesondere auch die Röntgenverfahren zählen, sind die akustischen Prüfmethoden, welche auf der Ausnutzung der Wechselwirkung von Schallwellen, beispielsweise Ultraschallwellen beruhen, ein weit angewandtes Verfahren zur zerstörungsfreien Prüfung des inneren Volumens von einem Objekt. In den letzten Jahren wurden hierbei einige bildgebenden Prüftechniken und Algorithmen entwickelt, die auf dem tomographischen Prinzip basieren und gegebenenfalls bessere Ergebnisse im Vergleich zu zuvor genutzten konventionellen akustischen Prüfverfahren bieten. So können durch den Einsatz entsprechender tomographischer Prinzipien beispielsweise ein besseres Auflösungsvermögen sowie eine Möglichkeit der Größenbestimmung und eine aussagekräftige Darstellung der Prüfergebnisse erzielbar sein. Bevor jedoch das Prinzip der akustischen Tomographie näher erläutert wird, sollen zunächst Ausführungsbeispiele näher beschrieben und erläutert werden.

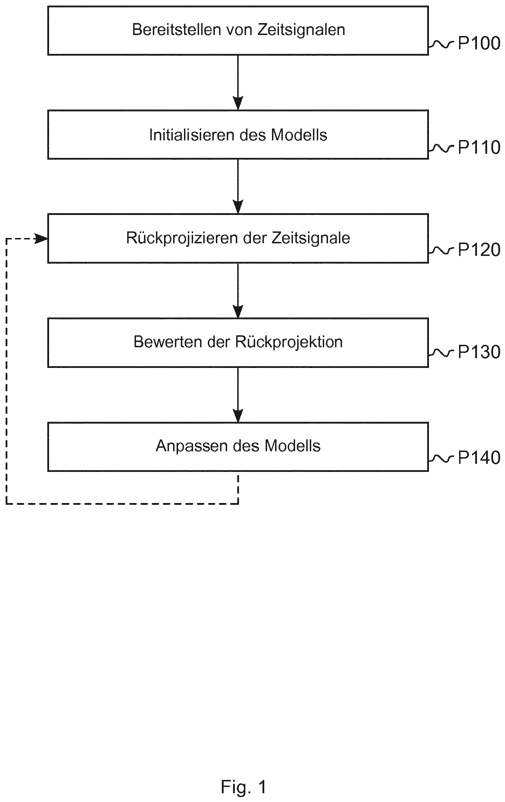

Fig. 1 zeigt ein Flussdiagramm eines Verfahrens zum Prüfen eines zu untersuchenden Objekts gemäß einem Ausführungsbeispiel. Das Verfahren umfasst so in einem Prozess P100 ein Bereitstellen wenigstens eines Satzes von akustisch erfassten Zeitsignalen jeweils bezogen auf einen Ausbreitungsweg von einem gemeinsamen Sender zu einer Mehrzahl von Empfängern, wobei der Ausbreitungsweg wenigstens teilweise durch das Objekt verläuft und der Sender von den Empfängern beabstandet angeordnet ist. In einem Prozess P110 wird ein Modell des Objekts initialisiert, wobei das Modell räumlich veränderliche elastische Eigenschaften des Objekts und seine Struktur (Inhomogenität) umfasst.

In einem Prozess P120 wird eine Rückprojizierung der Zeitsignale ausgehend von den Positionen der Mehrzahl der Empfänger in ein virtuelles Objekt basierend auf dem zuvor genannten Modell durchgeführt. Im Rahmen des Prozesses P120 wird so die eigentliche akustische Tomographie verwendet.

In einem Prozess P130 wird die so erzielte Rückprojektion bewertet und in einem Schritt P140 das der Rückprojektion und damit der akustischen Tomographie zugrundeliegende Modell basierend auf der Bewertung der Rückprojektion (Prozess P130) angepasst.

Das Verfahren, wie es beispielsweise in einem Ausführungsbeispiel in Fig. 1 gezeigt ist, kann hierbei insbesondere referenzkörperfrei durchgeführt werden, also ohne dass im Rahmen der Initialisierung des Modells (Prozess P110) bereits ein grundlegendes Modell des zu untersuchenden Objektes (Prüfobjekt) numerisch an einem Referenzkörper erfasst und dort in das Modell übernommen wird. Selbstverständlich kann es jedoch gegebenenfalls ratsam sein, Informationen über das Objekt, welche verfügbar sind, in das Modell bereits bei der Initialisierung einzufügen bzw. dort zu berücksichtigen, um so gegebenenfalls eine Anpassung des Modells zu beschleunigen bzw. ein Konvergieren desselben mit einer höheren Wahrscheinlichkeit zu erzielen.

Wie in Fig. 1 durch einen gestrichelten Pfeil auch angedeutet ist, kann hierbei das Verfahren wenigstens teilweise iterativ und damit wenigstens teilweise wiederholend durchgeführt werden. So kann das Verfahren beispielsweise ein iteratives Rückprojizieren (Prozess P120), Bewerten der Rückprojektion (Prozess P130) und Anpassen des Modells (Prozess P140) umfassen. Das iterative Wiederholen, also beispielsweise der Rücksprung nach dem Prozess P140 zu dem Prozess P120 kann hierbei beispielsweise dann erfolgen, wenn die Bewertung im Prozess P130 eine vorbestimmte Bedingung nicht erfüllt. Je nach konkreter Implementierung kann diese Bedingung beispielsweise dann nicht erfüllt sein, wenn eine maximale Anzahl von Iterationsschritten noch nicht erreicht ist und/oder eine Veränderung des Modells bzw. eine Anpassung desselben in dem Prozess P140 kaum oder zu keiner Verbesserung geführt hat.

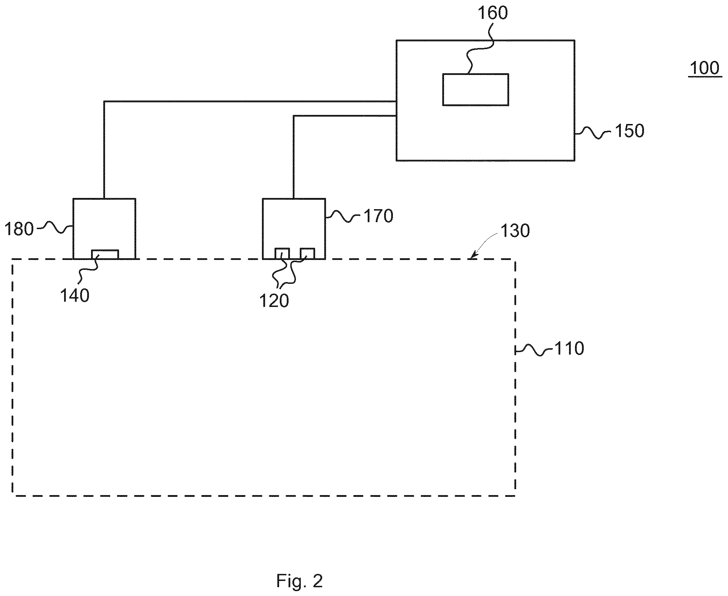

Wie im Zusammenhang mit Fig. 2 noch näher erläutert wird, kann bei einem Ausführungsbeispiel das Objekt einen zu untersuchenden Bereich aufweisen, wobei der zu untersuchende Bereich entlang einer Richtung an einer Oberfläche des Objekts zwischen dem Sender und der Mehrzahl von Empfängern angeordnet ist. Bei der Bewertung im Prozess P130 können hierbei eine Vielzahl unterschiedlicher Methoden angewendet werden. Erfindungsgemäß erfolgt das Bewerten basierend auf einem Vergleichen einer Position des Senders und einer rückprojizierten Position des Senders. Gleiches kann ergänzend ebenso für ein Vergleichen einer Position einer bekannten Außenkante und/oder einer bekannten Außenfläche des Objekts mit einer entsprechenden rückprojizierten Position der Außenkante bzw. Außenfläche gelten. Ebenso kann ergänzend bei dem Bewerten der Rückposition auch eine Bewertung einer Amplitude und/oder einer Schärfe der rückprojizierten und summierten akustischen Signale herangezogen werden. Eine numerische Beschreibung wird im weiteren Verlauf der Beschreibung gegeben, bei der diese drei Parameter, nämlich eine Abweichung der Position der rückprojizierten und summierten Signale von einer bekannten Position, einer Amplitude an der rückprojizierten Position bzw. in ihrer Umgebung sowie eine Unschärfe in der Umgebung der rückprojizierten Position auf Basis von entsprechenden Gewichtungskoeffizienten erfolgt. Zur Verbesserung eines solchen numerischen Ergebnisses kann gegebenenfalls ein Schwellwertverfahren angewendet werden, bei dem nur solche Amplitudenwerte berücksichtigt werden, die wenigstens einen Amplitudenschwellenwert überschreiten. Hierdurch kann gegebenenfalls ein Einfluss von untergeordneten Bereichen bzw. Raumpunkten des Modells im Falle einer diskreten Implementierung eines solchen Modells reduziert und damit gegebenenfalls eine Verbesserung der Genauigkeit erzielt werden.

Ebenso kann bei der Rückprojektion auch eine Berücksichtigung von Wellenumwandlungseffekten erfolgen, bei der nicht nur eine Schallausbreitung entlang des Ausbreitungswegs der direkt erzeugten Wellen von Sender zu Empfänger in Betracht gezogen werden, sondern auch Ultraschallwellen bzw. Schallwellen, die wegen der Wellenumwandlung an Inhomogenitätsgrenzen oder an den Objektflächen, wie etwa Rückwandflächen, Decklageflächen und/oder Stirnflächen, entstehen. Hierdurch werden zusätzliche akustische Informationen über das Objektgefüge berücksichtigt und können so zu einer Verfeinerung der Rekonstruktionsergebnisse beitragen. Die Idee dieses Aspekts besteht in der Optimierung der Parameter des anisotropen inhomogenen Objektes basierend auf den Ergebnissen der tomographischen Rekonstruktion der betreffenden akustischen Daten (Ultraschallwerten), wobei die Anisotropie und Inhomogenität berücksichtigt wird. Ob bei der Rekonstruktion tatsächlich auch die umgewandelten Wellen benutzt werden, ist hierbei weniger relevant.

Selbstverständlich können auch mehrere Sätze von akustisch erfassten Zeitsignalen im Rahmen des Verfahrens bereitgestellt werden, wobei jeder der Sätze von Zeitsignale wenigstens einer unterschiedlichen gemeinsamen Position des Sensors bezogen auf die Position der Mehrzahl von Empfängern entspricht. Anders ausgedrückt entspricht jeder Satz von Zeitsignalen einem unterschiedlichen Abstand des Senders zu der Mehrzahl der Empfänger. Dies kann durch ein Bewegen des Senders, durch ein Bewegen der Mehrzahl der Empfänger oder durch eine kombinierte Bewegung beider erfolgen, sowie durch die Variation von Abständen zwischen den einzelnen Empfängern. Entsprechend kann bei der Rückprojektion der Zeitsignale nicht nur die Zeitsignale eines Satzes sondern die Zeitsignale der mehreren Sätze berücksichtigt werden.

Umfasst die Implementierung ebenso entsprechende Sensoren für die akustischen Daten, kann das Verfahren selbstverständlich ebenso das Erfassen der entsprechenden akustischen Zeitsignale umfassen, was beispielsweise auf ein Aussenden eines Signals durch den Sender hin erfolgt.

Ausführungsbeispiele können so beispielsweise für eine qualitative oder quantitative zerstörungsfreie Prüfung von Schweißnähten an Primärkühlkreislaufen von Reaktoren eingesetzt werden.

Fig. 2 zeigt ein Blockschaltbild eines Prüfsystems 100 zum Prüfen eines Objekts 110. Das Prüfsystem 100 umfasst hierbei eine Mehrzahl von Empfängern 120 für akustische Signale, die ausgebildet sind, um mittelbar oder unmittelbar auf eine Oberfläche 130 des Objekts 110 aufbringbar zu sein. Ebenso umfasst das Prüfsystem 100 einen Sender 140, der ebenso ausgebildet ist, um mittelbar oder unmittelbar auf der Oberfläche 130 des Objekts 110 aufbringbar zu sein. Er ist darüber hinaus ausgebildet, um ein akustisches Signal in das Objekt 110 so einzuleiten, dass ein Ausbreitungsweg zu den Empfängern wenigstens teilweise durch das Objekt 110 verläuft. Schließlich umfasst das Prüfsystem 100 ferner eine Steuerschaltung 150, die ausgebildet ist, um ein Ausführungsbeispiel eines Verfahrens auszuführen. Je nach konkreter Implementierung kann die Steuerschaltung 150 hierbei beispielsweise einen Prozessor 160 oder eine andere programmierbare Hardwarekomponente umfassen, auf der ein Programm gemäß einem Ausführungsbeispiel ablaufen kann, mit deren Hilfe das Verfahren ausgeführt wird.

Das Prüfsystem 100 ist bei dem in Fig. 2 gezeigten Ausführungsbeispiel so ausgestaltet, dass die Empfänger 120 der Mehrzahl von Empfängern in einem ersten Prüfkopf 170 und der Sender 140 in einem zweiten Prüfkopf 180 angeordnet ist, wobei die Prüfköpfe 170, 180 gerade in der Lage sind, um auf die Oberfläche 130 des Objekts 110 aufgebracht zu werden.

Wie eingangs bereits erläutert wurde, basieren Ausführungsbeispiele hierbei in Form des Schrittes der Rückprojizierung der Zeitsignale in das virtuelle Objekt auf Basis des Modells auf dem Prinzip der akustischen Tomographie, welches im Folgenden der Einfachheit halber in zweidimensionaler Beschreibung näher erläutert wird.

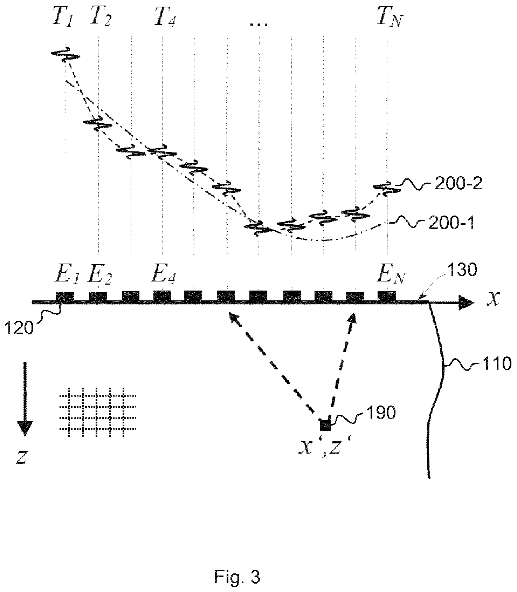

Auf der Oberfläche 130 des auch als Prüfobjekt bezeichneten Objekts 110 werden Empfänger 120, die auch als Ultraschallwandler $E_1$ bis $E_N$ in Fig. 3 bezeichnet sind, angeordnet. Die Empfänger 120 weisen hierbei jeder für sich individuell eine kleine Apertur auf, was zu einem sehr divergenten und damit weit geöffneten Schaltfeld führt, welches diese erzeugen bzw. empfangen können. Die Apertur ist hierbei der Schwingungsdurchmesser des Wandlers, welcher den Schall erzeugt bzw. empfängt.

Das Objekt 110 wird von einer Schallquelle beschallt. Die Quelle kann hierbei sowohl einer der schon erwähnten Wandler 120 und/oder 140, wie auch ein anderer Wandler, welcher noch zu beschreiben ist, sein. Nachdem einer oder mehrere im Objekt 110 vorhandene Ungänzen oder Störstellen 190 von der ankommenden Schallwelle getroffen werden, erzeugen diese als sekundäre Quelle je nach Richtcharakteristik mehr oder weniger gerichtete oder ungerichtete Streufelder, welche wiederum von den Ultraschallwandlern, also den Empfängern 120 empfangen werden. Dies wird nachfolgend noch im Zusammenhang mit Fig. 3 näher ausgeführt. Da die Empfänger 120 räumlich verteilt sind, entsteht für jede Ungänze bzw. jede Störstelle 190 im Datenbereich eine Laufzeitortskurve (hyperbelförmige 200-1 im Fall eines homogenen isotropen Objekts bzw. beliebig förmige 200-2 in allgemeinem Fall). Der Datenbereich stellt hierbei die empfangenen Laufzeitsignale T1 bis TN dar. Die empfangenen Laufzeitsignale, die auch als Zeitsignale bezeichnet werden, werden für die Rekonstruktion des tomographischen Bildes genutzt. Der Rekonstruktionsvorgang kann die Erstellung eines in Pixeln diskreten räumlichen Modells (virtuelles Objekt) des Objekts 110 und einer Rückprojektion der empfangenen Datenhyperbel (Zeitsignale) in das Modell unter Berücksichtigung der Messpositionen, also der Positionen des Empfängers 120 umfassen. Jedem Pixel, also beispielsweise dem Pixel (X', Z') der Störstelle 190 im Rekonstruktionsraum wird ein Amplitudenwert zugeordnet, der einem Integral der skalaren Messdaten (Messwerte) entlang den Datenhyperbeln entspricht. Liegt tatsächlich einer der Streuer im betrachteten Pixel (X', Z') so liefert die Integrationsprozedur durch eine konstruktive Interferenz der Messdaten einen hohen Wert als Ergebnis.

Andernfalls wird dem Pixel, Voxel oder Koordinatenpunkt in Folge einer destruktiven Interferenz ein niedrigerer Wert zugeordnet. Nach Berechnung von allen entsprechenden Datenpunkten entstehen in dem räumlichen Modell knotenartige Strukturen, an denen die Messsignale konstruktiv miteinander interferieren. Je nach konkreter Implementierung kann anstelle der Amplitude auch die Teilchenauslenkungen, also die eigentlichen Messwerte, verwendet werden. Diese knotenartigen Strukturen entsprechen dann bei korrekter Rückprojizierung der Zeitsignale den Reflektoren in dem Objekt 110. Das rekonstruierte, beispielsweise zweidimensionale Bild wird auch Sektor-B-Bild genannt. Das oben erläuterte Prinzip gilt auch für dreidimensionale Rekonstruktionen, also Volumen-Rekonstruktionen.

Im Falle eines isotropen homogenen Werkstoffs als Objekt 110 erfolgt der Übergang vom Zeitbereich, also den empfangenen Laufzeitortskurven, zu dem räumlichen Modell durch Multiplikation der Laufzeit mit der Schallgeschwindigkeit v, die im isotropen homogenen Werkstoff bekannt und konstant ist. Echosignale von einem Steuer bilden in dem Datenbereich in diesem Fall eine Hyperbelkurve, wie dies die Ortszeitkurve 200-1 illustriert.

In einem anisotropen und inhomogenen Werkstoff als Objekt 110 weist diese Kurve (Ortszeitkurve 200-2) in Folge der Richtungsabhängigkeit der Schallgeschwindigkeit sowie in Folge von Schallbrechungseffekten an Inhomogenitätsgrenzen eine kompliziertere Form auf, wie dies die bereits genannte Kurve 200-2 in Fig. 3 auch zeigt. Um die empfangenen Ultraschalldaten richtig in das räumliche Modell zurück propagieren zu können, ist daher eine genauere Zuordnung der empfangenen Laufzeitsignale ratsam oder sogar erforderlich. Hierfür ist das Verständnis über die tatsächliche Ausbreitung der akustischen Wellen in dem Objekt 110 ratsam, gegebenenfalls sogar nötig.

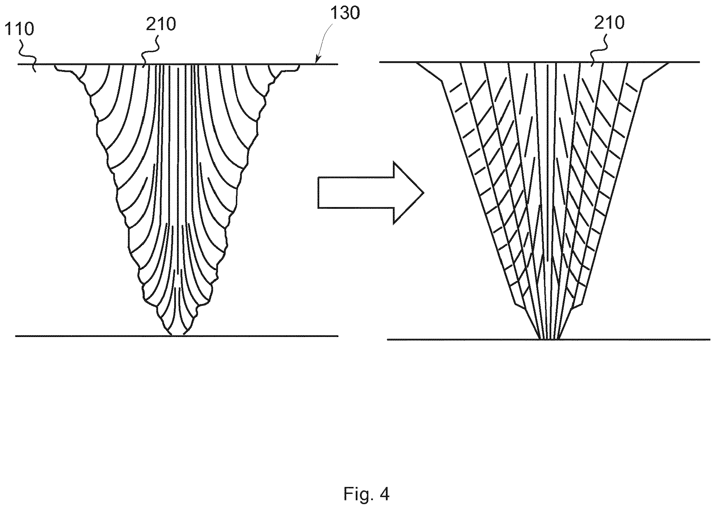

Für austenitische Schweißverbindungen ist bereits eine entsprechende Technik angewandt worden. Sie basiert auf einer Vorgehensweise, welche ein Modell erstellt, das die Inhomogenität des Prüfobjekts sowie die akustischen Eigenschaften, also die elastischen Konstanten, jedes stückweise homogen angenommenen Bereichs beschreibt. Dies ist in Fig. 4 schematisch dargestellt.

Fig. 4 zeigt so in einer linken Hälfte eine vereinfachte Darstellung einer austenitischen Schweißverbindung 210 als Schliffdarstellung in einem Objekt 110, wobei sich die Schweißverbindung 210 von einer Oberfläche 130 in das Objekt 110 hinein erstreckt. In Form von entsprechenden Linien sind einzelne Kristallgefügeabschnitte in der linken Hälfte der Fig. 4 im Inneren der Schweißnaht 210 dargestellt.

In einer rechten Hälfte der Fig. 4 ist eine numerische Approximation eines entsprechenden Modells der Schweißverbindung 210 dargestellt, wobei dort Bereiche identischer akustischer bzw. elastischer Eigenschaften durch die dort eingezeichneten Linien eingeschlossen sind. Diese Bereiche umfassen typischerweise mehrere Koordinatenpunkte und können hierbei je nach konkreter Implementierung eines entsprechenden Modells unterschiedliche akustische Eigenschaften und unterschiedliche akustische Modelle aufweisen.

Die zuvor genannte Vorgehensweise umfasst ferner die Simulation der Schallausbreitung unter Berücksichtigung der Anisotropie und der Schallbrechung, wobei die Laufzeiten von jeder Schallquelle bzw. jedem Schallempfänger zu jedem Punkt des Prüfvolumens berechnet werden. Schließlich erfolgt auf Basis der ermittelten Laufzeiten eine tomographische Rekonstruktion.

Die entwickelten Techniken zeigen - durch Experimente überprüft und verifiziert -, dass ein verbessertes Nachweis- und Analysevermögen bei anisotropen und inhomogenen Werkstoffen erzielbar ist. Der Einsatz dieser Techniken in der Prüfpraxis ist jedoch häufig beschränkt, wenn nicht sogar vollständig verhindert. Dies liegt daran, dass häufig die Kenntnis der Parameter, welche die Schallausbreitung in dem anisotropen und inhomogenen Werkstoff beschreiben, nicht zur Verfügung steht. Selbst geringste Abweichungen der angenommenen Modellparameter von ihren tatsächlichen Werten können infolge der Mehrfachschallbrechungen an den Kristallen akkumuliert und vermehrt werden und zu einem nicht akzeptablen Fehler bei der Laufzeitbestimmung und damit zu einer Fehlortung (falscher Ortsbestimmung) der Ungänzen bzw. Störstellen führen. Zu den Modellparametern können hierbei sowohl die elastischen Konstanten als auch die Inhomogenität zählen. Für das auf dem kohärenten Aufaddieren basierende und durch phasenempfindliche, auf Laufzeitmessungen basierende Tomographieverfahren hat also die Exaktheit der Modellvorstellung eine entscheidende Bedeutung. Andererseits können in der Praxis die tatsächlichen Anisotropie und Inhomogenität zerstörungsfrei durch Messung selten, wenn nicht sogar nie, genau bestimmt werden. Variationen von Umgebungsbedingungen und Fertigungsparametern, insbesondere bei der manuellen Fertigung von Objekten, können dazu führen, dass die physikalischen Eigenschaften des Objekts und seiner Struktur stark und nicht vorherbestimmbar von den geplanten oder angenommenen Werten abweichen kann. Die Zuverlässigkeit eines akustischen Tomographieverfahrens an einem solchen Prüfobjekt ohne genaue Kenntnisse seiner tatsächlichen Eigenschaften ist also gegebenenfalls sehr fragwürdig.

Ausführungsbeispiele können hier eine prüftechnische Lösung des Problems auf Basis einer iterativen Bestimmung der Einflussparameter ermöglichen, wie sie beispielsweise für eine quantitative oder qualitative zerstörungsfreie Prüfung von Schweißnähten an Primärkühlkreislaufen von Reaktoren eingesetzt werden kann.

Ausführungsbeispiele basieren hierbei auf dem Prinzip der konstruktiven und destruktiven Interferenz von akquirierten Signalen (Zeitsignale) bei der tomographischen Rekonstruktion des Volumens. Werden die gemessenen Laufzeitsignale in das räumliche Modell, das beispielsweise als Pixelraum diskret ausgestaltet sein kann, fehlerhaft projiziert, so erfolgt durch die dadurch bewirkte Phasenverschiebung typischerweise eine inkohärente Summierung der Signale, was die Fokussierungsqualität erheblich vermindern kann. Die Voraussetzung, dass die realen Parameter für eine Rekonstruktion möglichst genau bekannt sein müssen, ist die Grundlage für die hier beschriebene Methode, die unbekannten Parameter durch iterative Anpassung der Größen zu bestimmen, welche dann die konstruktive und destruktive Interferenz im räumlichen Modell ohne Phasenfehler ermöglichen kann.

Als Axiom wird daher postuliert und durch Ergebnisse bestätigt, dass die beste Fokussierung dann und nur dann erreicht wird, wenn alle beeinflussende Größe, welche eine kohärente bzw. inkohärente Summierung bewirken, ihren realen, im betreffenden Medium oder Objekt 110 vorliegenden Werten entsprechen, diesen also möglichst nahekommen. Unter der besten Fokussierung ist einerseits eine solche zu verstehen, bei der die Positionen der rekonstruierten Anzeigen von Reflektoren mit ihren realen Koordinaten in dem Objekt übereinstimmen. Zum anderen sind solche, bei denen die Abmessungen der Anzeigen sich optimal den tatsächlichen Reflektorgrößen annähern und das rekonstruierte Bild nicht zuletzt auch die geringsten Rekonstruktionsartefakte aufweist, die Folge der inkohärenten Addierung sind. Die zweite Forderung setzt hierbei typischerweise voraus, dass ein Kriterium vorliegt, welches die Fokussierungsqualität quantitativ zu beschreiben vermag. Als quantitative Größe dienen dementsprechend die Amplitude, die Unschärfe, also die Fläche, sowie die Positionsabweichung einer rekonstruierten Anzeige von einem bekannten Reflektor, einer bekannten Schallfläche sowie die Amplituden der Scheinanzeigen, also der Artefakte.

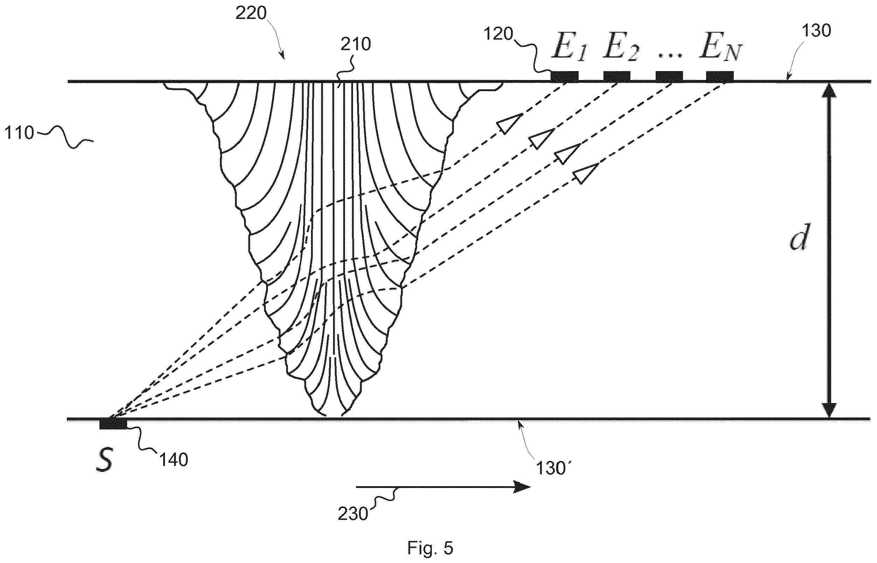

Fig. 5 zeigt eine prinzipielle Anordnung bei einem Ausführungsbeispiel, bei der die Empfänger 120 auf einer Oberfläche 130 des Objekts 110 angeordnet sind, während der Sender 140 auf einer der Oberfläche 130 gegenüberliegenden und in einem Abstand d beabstandeten Oberfläche 130' angeordnet ist. Die Schweißverbindung 210, welche den zu untersuchenden Bereich 220 des Objekts 110 darstellt, ist hierbei entlang einer Richtung 230 zwischen dem Sender 140 und der Mehrzahl von Empfängern 120 angeordnet. Die Richtung 230 verläuft hierbei parallel zu der Oberfläche 130 bzw. der Oberfläche 130'. Bei der Schweißnaht 210 als Beispielprüfobjekt wird hierbei eine austenitische Schweißverbindung angenommen und herangezogen.

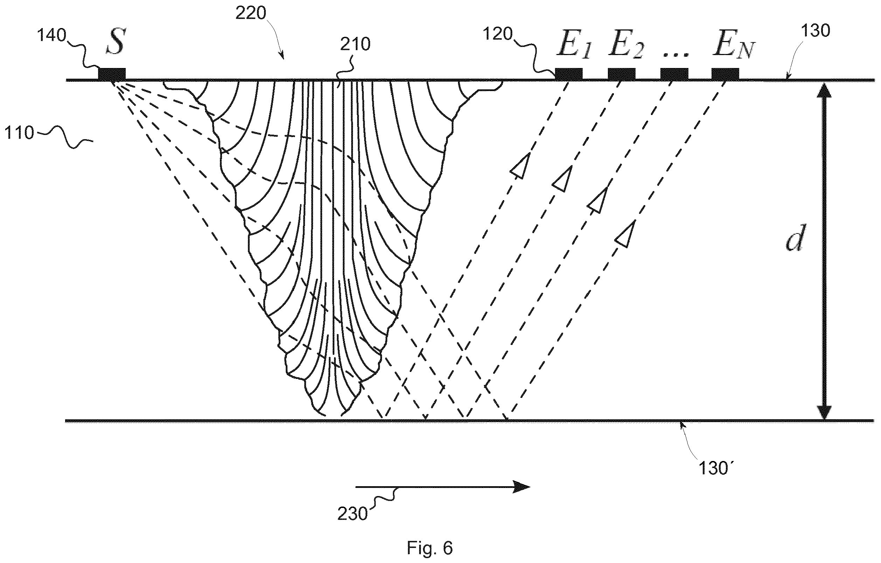

Fig. 6 zeigt hierbei eine Fig. 5 ähnliche Situation, bei der jedoch der Sender 140 sowie die Empfänger 120 auf der gleichen Oberfläche 130 angeordnet sind, wodurch die Ausbreitungswege der Schallsignale des Senders 140 auf dem Weg zu den einzelnen Empfängern 120 an der der Oberfläche 130 gegenüberliegenden Oberfläche, der Rückseitenoberfläche 130' reflektiert werden. Auch hier weist wiederum die Oberfläche 130 von der Oberfläche 130' einen Abstand d auf.

In den in den Fig. 5 und 6 dargestellten Situationen ist also eine Ultraschallquelle S (Sender 140) und mehrere Ultraschallempfänger 120 ($E_1$ bis $E_N$) an dem Objekt 110 so angeordnet, dass die von dem Sender 140 erzeugten Ultraschallwellen sich durch den anisotropen inhomogenen Gegenstand (Objekt 110) ausbreiten und von den Empfängern 120 erfasst werden. Je nach Zugänglichkeit können die Empfänger 120 sowohl auf einer als auch auf beiden Seiten des Objekts 110 angeordnet sein, wie dies in den Fig. 5 und 6 dargestellt ist. Die Empfangscharakteristik jedes Empfängers 120 besitzt hierbei häufig keine signifikante Richtwirkung. Dies stellt im Allgemeinen keine Einschränkung dar, wenn die entsprechende Größe des Empfängers klein im Verhältnis zur Wellenlänge der erzeugten akustischen Wellen ist. Hierdurch können die Empfänger 120 aus vielen, wenn nicht allen verschiedenen Richtungen empfangen.

Der Empfangsvorgang von den Wandlern $E_1$ bis $E_N$ (Empfänger 120) kann mit der Erzeugung der Schallwalle vom Sender 140 (Sender S), jedoch bei einem bekannten Zeitversatz auch um diesen zuvor oder später beginnen. Die empfangenen Laufzeitsignale können beispielsweise verstärkt, abgetastet, gespeichert und für die nachfolgende Rekonstruktion des tomographischen Sektor-B-Bildes genutzt werden. Die Prozedur der Datenbearbeitung wird nachfolgend kurz erläutert. Sie basiert darauf, dass ein pixeliertes bzw. diskretes, virtuelles Modell des Objekts 110 (Prüfgegenstandes) erstellt wird, in welchem seine Anisotropie und Inhomogenität in nullter Näherung angenommen werden. Dann erfolgt die Simulation der Schallausbreitung unter Berücksichtigung der Anisotropie und von Brechungsphänomenen an den Inhomogenitätsgrenzen und im Falle einer Anordnung, wie sie in Fig. 6 dargestellt ist, auch der Schallreflexion bzw. Schallstreuung an der Rückwandfläche 130'. Während des Simulationsvorgangs werden die Laufzeiten von jedem Pixel des Modells zu jedem Empfänger bestimmt und für die Rekonstruktion des tomographischen Sektor-Bildes genutzt.

Grundsätzlich kann das Modell des Objekts 110 auf Basis eines diskreten Gitters von Punkten erfolgen, denen jeweils die elastischen bzw. optischen Eigenschaften zugeordnet werden. Dieses Modell kann gegebenenfalls dadurch vereinfacht werden, dass auf Basis gewisser Vorkenntnisse hinsichtlich des Objekts 110 diese Datenpunkte zu größeren Bereichen zusammengefasst werden können, die beispielsweise mehr als einen Datenpunkt umfassen. Diese können dann gegebenenfalls gemeinsam berücksichtigt werden. Die Struktur des Objekts kann so geclustert werden.

Zur Modellierung einer austenitischen Schweißverbindung, also beispielsweise der Schweißnähte 210, wie diese in den Fig. 4, 5 und 6 gezeigt sind, kann so beispielsweise eine im Rahmen der Schweißverbindung auftretende Stängelkristallstruktur durch folgende Annahmen leichter modelliert werden. Die grundsätzlich sehr inhomogene Struktur der austenitischen Schweißnaht 210 kann so in Zonen aufgeteilt werden, in welchen die Stängelkristalle, die dort vorliegen, näherungsweise als gleich orientiert betrachtet werden. Die Stängelkristalle können hierbei in jeder der Zonen der austenitischen Schweißnaht 210 als transversal-isotropes Medium betrachtet werden. Die Stängelkristalle in den verschiedenen Zonen unterscheiden sich dann lediglich durch die Orientierung ihrer akustischen Achsen, während ihrer elastischen Eigenschaften, also die Werte ihrer Steifigkeitsmatrix sowie ihrer Dichte im Wesentlichen konstant betrachtet werden. Die akustischen Achsen der Austenitkristalle sind hierbei ebenso häufig lediglich in der senkrecht zu der Schweißnaht entstehenden Ebene angeordnet.

Bei der Initialisierung des Modells (Prozess P110) können diese Informationen herangezogen werden. Im Falle einer austenitischen Schweißnaht 210 gehören so zu den Eingangsparametern des Modells die Schweißnahtgeometrie, akustische Eigenschaften des Grundwerkstoffs, sowie Orientierung und akustische Eigenschaften der Stängelkristalle. Die akustischen Eigenschaften können hierbei in Form einer Steifigkeitsmatrix C vorgegeben werden, die aufgrund der oben genannten Annahmen nur noch fünf voneinander unabhängige elastische Konstanten aufweist.

Die akustisch anisotropen Stängelkristalle der austenitischen Schweißnaht 210 können so als transversal-isotropes Medium betrachtet werden. Die Symmetrieachse der Stängelkristalle kann hierbei der Wachstumsrichtung der Kristalle während des Erstarrungsprozesses entsprechen. Obwohl jeder einzelne Stängelkristall für sich mikroskopisch eine kubischsymmetrische Struktur besitzt und entsprechend anisotrope Eigenschaften aufweist, kann dies jedoch im Allgemeinen außer Acht gelassen werden. Senkrecht zu der Wachstumsrichtung können die Stängelkristalle nämlich in Folge ihrer regellosen Anordnung und eines im Verhältnis zu der verwendeten Wellenlänge kleinen Durchmessers als Isotrop betrachtet werden. Sie bilden so Kristalle mit einer isotropen Ebene.

In allen Ebenen außerhalb der isotropen Ebene unterscheiden sich die Vektoren der Phasengeschwindigkeit und der Gruppengeschwindigkeit sowohl durch die Richtung als auch durch ihre Länge. Die Existenz einer solchen Symmetrieachse reduziert so die Zahl der Komponenten der Steifigkeitsmatrix des transversal-isotropen Mediums von dem allgemeinen Fall von 36 auf 12, wobei lediglich 5 elastische Konstanten unabhängig voneinander sind.

Sind so die Komponenten des Elastizitätstensors bekannt, besteht die Möglichkeit, die Phasengeschwindigkeit v und die Gruppengeschwindigkeit V für einen vorgegebenen Phasenwinkel und entsprechende Gruppenwinkel Φ zu berechnen.

Zur Berechnung der Ausbreitung der elastischen Wellen können hierbei unterschiedliche Techniken eingesetzt werden, zu denen beispielsweise die elastodynamische finite Integrationstechnik (EFIT), die generalisierte Punktquellensynthese (GPSS) aber auch Strahlverfolgungstechniken (engl.: Ray Tracing) unter Berücksichtigung des Brechungsgesetzes gehören.

Zur Simulation und Berechnung des Schallausbreitungsverhaltens kann so beispielsweise im Rahmen eines solchen Modells ein Satz von drei Gruppen von Parametern genügen. Die erste Gruppe von Parametern ist die, die das eigentliche Prüfobjekt 110 beschreiben. Zu ihnen zählen die Position der Schweißnaht, Grenzen der transversal-isotropen Zonen, die Richtung der Stängelkristalle in jeder der transversal-isotropen Zonen, die Dichte und elastischen Eigenschaften der Stängelkristalle sowie die Schallgeschwindigkeit in dem Grundmaterial.

Hinzu können Parameter kommen, die sich auf den oder die Prüfköpfe 170, 180 und gegebenenfalls ihre geometrischen Ausgestaltungen sowie ihre Anordnung auf dem Prüfobjekt beziehen können. So kann zu diesen Parametern beispielsweise die Anzahl der Elemente, der Elementabstand, ein Keilwinkel, eine Vorlaufstrecke, falls vorhanden, eine Schallgeschwindigkeit in dem Prüfkopf bzw. in dem Keil sowie Abstände zwischen dem oder den Prüfköpfen und der Schweißnaht zählen.

Hinzu können Parameter des eigentlich verwendeten Algorithmus treten, wobei im Folgenden ein Strahlverfolgungsalgorithmus (Ray-Tracing-Algorithmus) zugrunde gelegt wird, dessen Ergebnisse in eine Nachschlagetabelle (Look-Up-Tabelle) abgelegt werden können. In dieser können beispielsweise die Ergebnisse der Simulation, nämlich die Laufzeiten, gespeichert werden, um sie für die nachfolgende tomographischen Rekonstruktion schnell und einfach benutzen zu können.

Diesem Modell bzw. Algorithmus werden die Parameter der Dimensionen des zu berechnenden Bereichs, das Raster der Nachschlagetabelle, also die Auflösung des zu rekonstruierenden Bildes, sowie der Bereich der zu berechnenden Einschallwinkel mit oberer und unterer Grenze sowie eine Schrittweite zugrunde gelegt.

Auch wenn grundsätzlich unterschiedliche Verfahren, wie sie bereits zuvor erwähnt wurden, eingesetzt werden können, wird nunmehr als ein Beispiel eine genauere Implementierung eines Strahlverfolgungsalgorithmus (Ray-Tracing-Algorithmus) beschrieben. Bei diesem wird die Ausbreitung des ungerichteten Schallfelds einer punktförmigen Schallquelle (des Senders 140) durch eine Vielzahl von Strahlen modelliert, die diese Quelle quasi aussendet. Während des Simulationsvorgangs wird jeder Strahl durch das diskrete räumliche Modell des zu beschallenden Objekts geführt. Bei einem Durchgang eines Strahls durch ein anisotropes inhomogenes Medium werden die Phänomene der Schallbrechung an den Grenzen und die Richtungsabhängigkeit der Schallgeschwindigkeiten berücksichtigt.

Jeder Strahl entspricht der normalen Richtung zur Strahlenfläche und repräsentiert die Richtung, in welcher die akustische Energie sich ausbreitet. In jedem Punkt des Modellraums ist der Strahl hierbei durch die momentanen Werte der Phasen- und Gruppengeschwindigkeit hinsichtlich Richtung und Betrag sowie durch die Laufzeit der simulierten Welle definiert. Die Laufzeit ist hierbei im Ausgangspunkt, also an der Schallquelle bzw. dem Sender 140 gleich Null. Der Startwinkel kann hierbei so variiert werden, dass möglichst viele, gegebenenfalls sogar alle Punkte des gewünschten Bereichs von den Strahlen abgedeckt werden und die entsprechenden Zellen der Nachschlagetabelle ausgefüllt werden.

Zur Ermittlung der Laufzeiten ausgehend von den modulierten Schallquellen bis zu jedem Punkt des räumlichen Objektmodells können die ermittelten Laufzeiten in einer Nachschlagetabelle (Look-Up-Tabelle) gespeichert werden. Jede Zelle dieser Tabelle entspricht einem Punkt bzw. Volumenelement des diskreten Modells des zu rekonstruierenden Prüfobjekts 110 und enthält die Laufzeit, mit welcher die elastische Welle von der Schallquelle dieses Volumenelements bzw. von dem Volumenelement den entsprechenden Empfänger erreicht wird. Eine Dimension der Nachschlagtabelle kann hierbei der Reihe von Schallquelle(n) und Empfängern entsprechen. Je nach Ausgestaltung können so beispielsweise zwei, drei oder mehr Nachschlagetabellen und/oder entsprechend dimensionale Nachschlagetabellen verwendet werden. Dies kann ja nach Raster des Modells, also beispielsweise in Abhängigkeit davon, ob das Modell zwei- oder dreidimensional ist, erfolgen. Ebenso können optional weitere Informationen hinzutreten. Hierzu können beispielsweise eine Vielzahl der ermittelten Laufzeiten in einem anisotropen und inhomogenen Objekt, bei Berücksichtigung der Wellenumwandlung und/oder Reflexionen einer akustischen Welle zu dem Volumenelement entlang mehreren Pfaden zählen. Auch können gegebenenfalls mehrere Nachschlagetabellen verwendet werden, beispielsweise für jeden Prüfkopf eine eigene.

Dank der Nutzung einer solchen Nachschlagetabelle kann die Rückprojektion, also die Rekonstruktion des Volumenpixels bzw. Voxels beschleunigt werden. Hierzu werden die jeweiligen Laufzeitinformationen, also beispielsweise die Teilchenauslenkungen oder die Amplituden an den entsprechenden Raumpunkten aufaddiert.

Von konventionellen Lösungen unterscheiden sich Ausführungsbeispiele nicht zuletzt dadurch, dass im Rahmen des Algorithmus eine iterative Anpassung der Parameter des erstellten Modells, also beispielsweise hinsichtlich Anisotropie und Inhomogenität vorgenommen wird. Die Parameter des Modells werden hierbei zunächst fehlerhaft angenommen. Der Algorithmus basiert auf der Analyse der rekonstruierten Anzeige, die im Sektor-B-Bild der Ultraschallquelle entspricht. Ebenso kann auch eine Außenfläche oder Außenkante des Objekts 110 hierfür verwendet werden. Für eine quantitative Bewertung der Fokussierungsqualität bei tomographischer Rekonstruktion kann eine nicht-analytische Funktion $f_{DS}$ eingeführt werden, deren Argumente die elastischen Eigenschaften des erstellten Objektmodells und/oder seine Inhomogenität umfassen.

$$f^{DS} = f(a_1 \quad a_2 \quad a_3 \quad ... \quad a_k)$$

oder

$$f^{DS} = f(b_1 \quad b_2 \quad b_3 \quad ... \quad b_m)$$

oder

$$f^{DS} = f(a_1 \quad a_2 \quad ... \quad a_k \quad b_1 \quad b_2 \quad ... \quad b_m)$$

Hierbei bezeichnen a und b die k- bzw. m-dimensionalen Mengen zur Beschreibung der Anisotropie bzw. der Inhomogenität des Prüfobjekts 110.

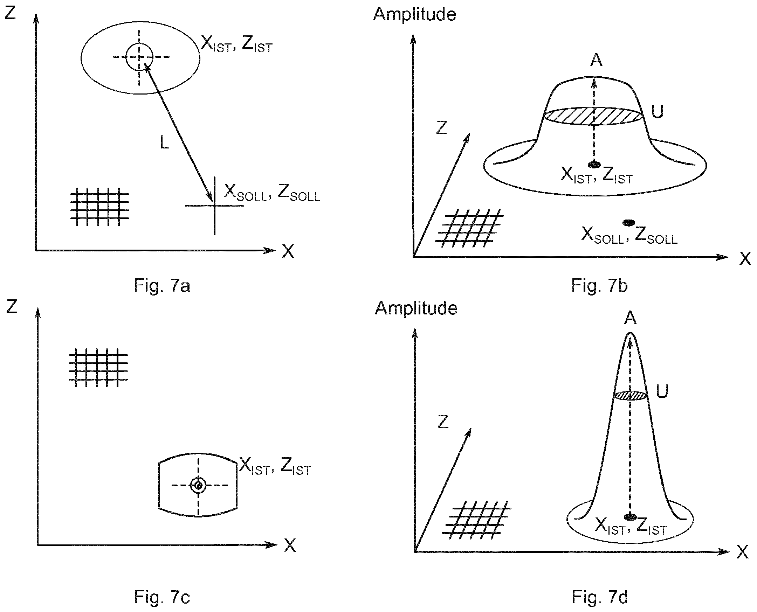

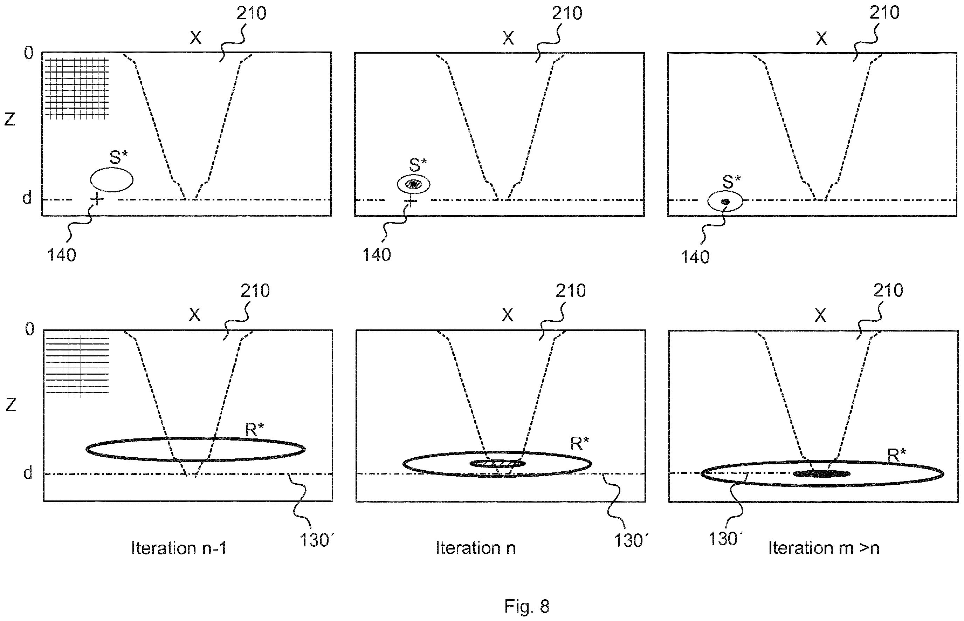

Die Bestimmung der korrekten Werte der Parameter a und/oder b, die das Prüfobjekt beschreiben, basiert also auf der Analyse des Wertes der $f_{DS}$-Funktion und auf der Optimierung der Eingangsparameter a und/oder b. Der Wert der Funktion $f_{DS}$ ist eine Kombination der Amplitude, der Schärfe und der Positionsabweichung einer Referenzanzeige, also der Anzeige S* von dem Sender S oder der Anzeige R* von der Rückwandfläche R, wie dies auch noch im Zusammenhang mit Fig. 8 näher erläutert wird. Eine Funktionsoptimierung kann dabei beispielsweise so ausgeführt werden, dass alle Eingangsparameter solange nach bestimmten Optimierungsverfahren angepasst werden, bis die $f_{DS}$-Funktion ein (lokales oder absolutes) Extremum erreicht. Hierbei wird die Amplitude A der Referenzanzeige maximal, die Unschärfe U und die Positionsabweichung L möglichst klein bzw. minimal, wie dies beispielsweise im Zusammenhang mit Fig. 7 weiter unten noch erläutert wird. Dies könnte dem Minimum bzw. dem Maximum der $f_{DS}$-Funktion entsprechen, je nachdem wie die Komponente A, U und L den Funktionswert der $f_{DS}$-Funktion bestimmen. Auf welche Weise die Funktion hierbei optimiert wird, kann grundsätzlich mithilfe unterschiedlicher Verfahren erfolgen. So kann beispielsweise ein Simplex-Verfahren (Nelder-Mead-Verfahren) verwendet werden. Ebenso kann ein Gradienten-Verfahren herangezogen werden. Auch können Neuronetze verwendet werden.

Die Funktion $f_{DS}$ (Abnahmesuche; engl.: Descent Search) wird zur quantitativen Bewertung der Fokussierungsqualität der tomographischen Rekonstruktion und dadurch zur Einschätzung der Korrektheit der Modellparameter verwendet. Die Argumente diese Funktion sind einerseits die Amplitude A der rekonstruierten Anzeige vom Sender 140 oder von der Oberfläche 130' in dem entsprechenden Schnittbereich des Sektor-Bildes, die Abweichung L der Anzeige von der Sollposition sowie die Fokussierungsschärfe bzw. -unschärfe (Unschärfe) U, die gemeinsam die Qualität des Ergebnisses repräsentieren. Als Bewertungsfunktion $f_{DS}$ kann so beispielsweise folgende Funktion verwendet werden:

$$f_{DS} = G_1 \cdot L + G_2 / A + G_3 \cdot U$$

Hierbei ist L der Abstand zwischen der Soll-Position ($X_{SOLL}$ und $Z_{SOLL}$) und der Ist-Position ($X_{IST}$ und $Z_{IST}$) der Fehleranzeige in dem rekonstruierten Schnittbild gemäß

$$L = \sqrt{(X_{SOLL} - X_{IST})^2 + (Z_{SOLL} - Z_{IST})^2 + ...}$$

Hierbei zeigt diese Gleichung eine zweidimensionale Formulierung. Bei einer dreidimensionalen Formulierung kann so ein durch die drei Punkte (...) angedeuteter zusätzlicher Term hinzutreten, der sich beispielsweise auf eine Y-Koordinate, also beispielsweise auf $(Y_{SOLL} - Y_{IST})^2$ beziehen kann.

Selbstverständlich können bei anderen Ausführungsbeispielen auch andere Funktionen basierend auf oder in Abhängigkeit von der Amplitude A, der Unschärfe U und/oder der Lage L der Anzeige von der Sollposition sein.

In der Funktion treten Parameter bzw. Gewichtungskoeffizienten $G_1$, $G_2$ und $G_3$ auf, die beispielsweise für die Positionsabweichung ($G_1$) und die Unschärfe ($G_3$) gleiche Werte annehmen können. Für die Amplitude ($G_2$) kann hier

ein beispielsweise um einen Faktor 1000 größerer Wert herangezogen werden, also beispielsweise $G_1 = 1$, $G_2 = 1000$, $G_3 = 1$. Selbstverständlich können diese Parameter auch andere Werte annehmen, die von den oben genannten Werten abweichen.

Bevor jedoch die Berechnung der Ist-Positionen, der Amplituden und der Unschärfe näher erläutert werden sollen, bietet es sich an, darauf hinzuweisen, dass eine Schwellenwertbewertung im Rahmen des Algorithmus eingesetzt werden kann. Hierdurch kann es möglich sein, Artefakte, die durch die Aufsummierung kleinerer Teilchenauslenkungenwerte auftreten, gegebenenfalls zu reduzieren oder sogar vollständig zu unterbinden. Als Zusatzparameter des Algorithmus können so ein Amplituden-Schwellenwert $A_{TR}$ definiert werden, wobei sämtliche Punkte mit Amplitudenwerten unterhalb des Schwellenwertes in der weiteren Analyse keine Berücksichtigung finden. Diese können zu Null gesetzt werden:

$$B_{ij} = \begin{cases} B_{ij}, & wenn\ B_{ij} \geq A_{TR} \\ 0, & wenn\ B_{ij} < A_{TR} \end{cases}$$

Die Werte $B_{ij}$ stellen hierbei die Absolutbetragswerte der Amplituden bzw. die Teilchenauslenkungen der einzelnen Bildpunkte des ausgewählten Bereichs dar. Der ausgewählte Bereich kann so eine Umgebung um einen bestimmten Punkt darstellen.

Als aktuelle Ist-Position kann so der Massenschwerpunkt des analysierten Bereichs dienen. Mit den Koordinaten $X_0$ und $Z_0$ als Startpunkte des ausgewählten Bereichs in einem übergeordneten Koordinatensystem und $\Delta X$ und $\Delta Z$ als Diskretisierungswerte bzw. Ortsauflösung des Bilds entlang der entsprechenden Achsen, ergeben sich so die Schwerpunkte gemäß den folgenden Gleichungen:

$$X_{IST} = X_0 + \left( \frac{\sum_{i=1}^{m}(i \cdot \sum_{j=1}^{n} B_{ij})}{\sum_{i=1}^{m} \sum_{j=1}^{n} B_{ij}} \right) \cdot \Delta X$$

$$Z_{IST} = Z_0 + \left( \frac{\sum_{j=1}^{m}(j \cdot \sum_{i=1}^{n} B_{ij})}{\sum_{i=1}^{m} \sum_{j=1}^{n} B_{ij}} \right) \cdot \Delta Z$$

Als Amplitude kann das arithmetische Mittel der Amplituden der betreffenden Bildpunkte in dem ausgewählten Bereich bzw. der Umgebung gewählt werden, wobei N die Anzahl der Bildpunkte ist, deren Wert die ausgewählte Schwelle $A_{TR}$ überschreitet:

$$A = \frac{\sum_{i=1}^{m} \sum_{j=1}^{n} B_{ij}}{N}$$

Als Unschärfe U kann die Gesamtfläche der Anzeige in dem betreffenden Sektor-B-Bild gewählt werden. Zahlenmäßig entspricht sie der Gesamtfläche der Bildpunkte in einem Bereich $B_1$, deren Amplitude größer ist als $k \cdot A$:

$$U = |B_1| \cdot \Delta X \cdot \Delta Z$$

$$B_1 = \{B : B_{ij} > k \cdot A\}$$

Der Koeffizient k ist neben dem Schwellenwert $A_{TR}$ ein zusätzlicher des Suchalgorithmus, der einen Wert zwischen 0 und 1 annehmen kann. Dieser stellt einen Schwellenwert für die Anzeigenausdehnung bezogen auf die Mittelwertamplitude dar.

Der Funktionswert der Funktion $f_{DS}$ wird an der rekonstruierten Anzeige von dem Sender 140 (Sender S) in dem Sektor-B-Bild oder eines anderen entsprechenden Referenzreflektors, wie die Oberfläche 130' des Prüfobjekts 110 oder eine entsprechende Kante an seiner Außenfläche bestimmt. Dieser stellt, wie oben bereits erläutert wurde, eine Kombination zwischen den Bedingungen dar, welche die Positionsabweichung L von der Soll-Position ($X_{SOLL}$,

$Z_{SOLL}$) in Bezug auf die Ist-Position ($X_{IST}$, $Z_{IST}$) der Anzeige darstellt. Die Ist-Position kann hierbei beispielsweise durch eine Position eines Massenschwerpunkts bestimmt werden.

Darüber hinaus geht in die Funktion $f_{DS}$ die Amplitude der Anzeige sowie die Unschärfe U ein, die beispielsweise die Fläche der Anzeige oberhalb einer bestimmten Amplitudenschwelle k·A darstellen kann.

Der Algorithmus der iterativen Bestimmung der richtigen Parameter in dem Argumentenraum, der beispielsweise die Parameter a und/oder b umfassen kann, funktioniert hierbei nach einem Prinzip, welches in Fig. 7 und 8 dargestellt ist. Hierbei illustriert Fig. 7a und b eine Abweichung L, sowie eine Amplitude A und eine Unschärfe U zu einem frühen Zeitpunkt der Iteration. Entsprechend sind hier die Abweichung L sowie die Unschärfe U deutlich größer als zu einem späteren Zeitpunkt der Iteration, der in den Fig. 7c und d illustriert ist. Im Unterschied hierzu ist die Amplitude A zu dem frühen Zeitpunkt der Iteration kleiner als zu dem späteren Zeitpunkt, wie er in den Fig. 7c und d gezeigt ist. Die Fig. 7a bis 7d zeigen so Positionen und Amplitudenprofile einer unfokussierten bzw. einer fokussierten Anzeige im rekonstruierten Sektor-Bild.

Fig. 8 illustriert in den oberen drei Teilabbildungen eine Verbesserung des Modells zur Beschreibung des Objekts 110 anhand des Senders S (Sender 140), während in den unteren Teilabbildungen die entsprechende Verbesserung des Modells für den Fall der Rückseitenfläche 130' illustriert wird. Die linken Teilabbildungen zeigen hierbei jeweils das Ergebnis auf Basis eines Modells zu einem Iterationszeitpunkt (n-1), während die mittleren Abbildungen das Ergebnis auf Basis eines veränderten bzw. angepassten Modells zum Zeitpunkt der Iteration n, also der Folgeiteration, illustrieren. Auf der rechten Seite sind dann zu einem späteren Zeitpunkt (Iteration m > n) dargestellt, bei denen die Ist-Positionen der betreffenden Strukturen, also des Sensors 140 bzw. der Rückseite 130' (R) mit denen der SollPositionen übereinstimmt. Entsprechend wandert nicht nur die Position der betreffenden Struktur zu ihrer Soll-Position, auch die Unschärfe nimmt ab und die Amplitude zu.

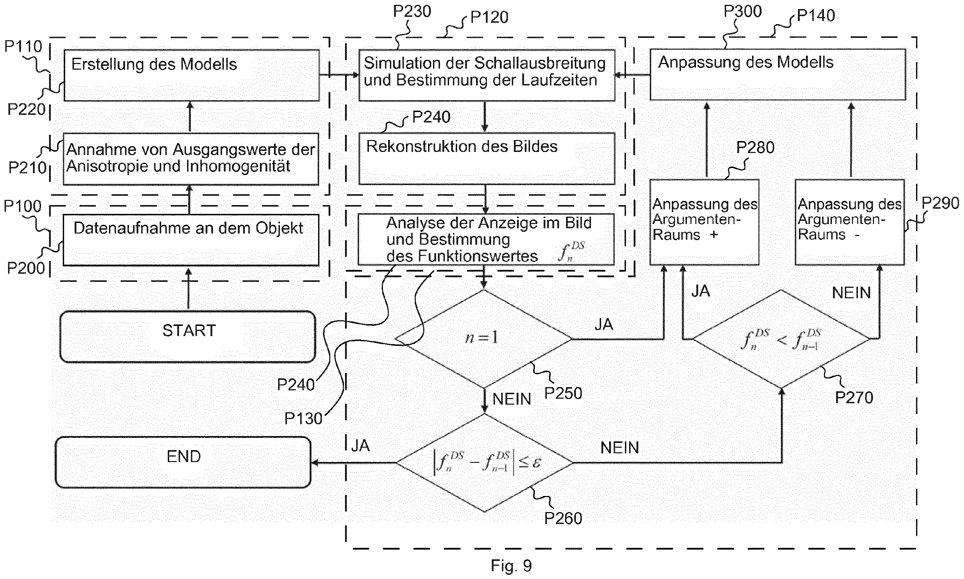

Fig. 9 zeigt ein fast ausführlicheres Flussdiagramm eines Verfahrens zum Prüfen eines zu untersuchenden Objekts. Nach einem Start des Verfahrens werden in dem Prozess P100 des Bereitstellens der Zeitsignale in einem Unterprozess P200 die Daten an dem betreffenden Objekt aufgenommen. Anschließend wird im Rahmen der Initialisierung des Modells (P110) zunächst in dem Unterprozess P210 Annahmen über die Ausgangswerte hinsichtlich Anisotropie und Inhomogenität gemacht, bevor diese in einem Unterprozess P220 des Erstellens des eigentlichen Modells im Rahmen der Initialisierung des Modells (Prozess P110) verwendet werden.

Das Rückprojizieren der Zeitsignale (Prozess P120) umfasst in einem Unterprozess P230 eine Simulation der Schallausbreitung, die Bestimmung der Laufzeiten sowie eine Rekonstruktion des Ergebnisbildes im Rahmen eines Unterprozesses P240. Die so gewonnenen Daten werden im Rahmen der Bewertung der Rückprojektion (Prozess P130) im Rahmen eines Unterprozesses P240 der Analyse der Anzeige in dem Bild und der Bestimmung der Funktionswerte der vorgenannten Funktion $f_{DS}$ in Abhängigkeit der Iteration n bestimmt.

Anschließend wird im Rahmen des Prozesses P140 das Modell angepasst, basierend auf der Bewertung der Rückprojektion, also basierend auf dem Ergebnis des Prozesses P130.

Hierzu wird zunächst in einem Schritt P250 geprüft, ob die erste Iteration vorliegt. Ist dies nicht der Fall, wird überprüft im Rahmen eines Unterprozesses P260, ob die Differenz der Bewertungsfunktion $f_{DS}$ zu der Voriteration (n-1) betragsmäßig unterhalb einer Schwelle ε liegt. Ist dies der Fall, wird das Verfahren beendet. Ist dies jedoch nicht der Fall, wird im Rahmen eines Unterprozesses P270 geprüft, ob der neu berechnete Funktionswert $f_{DS}(n)$ kleiner ist als der zuvor berechnete Wert $f_{DS}(n-1)$. Ist dies der Fall, wird im Rahmen eines Unterprozesses P280 eine positive Anpassung des Argumentenraums des Modells durchgeführt. Ist dies hingegen nicht der Fall, wird im Rahmen eines Unterprozesses P290 eine negative Anpassung des Argumentenraums durchgeführt. Unabhängig davon, welche Anpassung des Argumentenraums durchgeführt wird, folgt den Unterprozessen P280 bzw. P290 die eigentliche Anpassung des Modells in einem Unterprozess P300, bevor erneut im Rahmen des Unterprozesses P230 der Rückprojektion der Zeitsignale (Prozess P120) die Simulation der Schallausbreitung die Bestimmung der Laufzeiten durchgeführt wird.

Handelt es sich im Übrigen bei der Prüfung im Rahmen des Unterprozesses P250 um die erste Iteration (n=1), so wird ebenso zu dem Unterprozess P280 der positiven Anpassung des Argumentenraums bei dem in Fig. 9 illustrierten Ausführungsbeispiel gesprungen. Selbstverständlich sind jedoch andere Implementierungen möglich. So kann, um nur ein Beispiel zu nennen, natürlich im Rahmen des Unterprozesses P250 auch zu der negativen Anpassung des Argumentenraums in dem Unterprozess P290 gesprungen werden.

Der Suchvorgang startet so mit einer Ausgangsmenge von zunächst falsch angenommenen Parametern, die danach mit jeder Iteration präzisiert werden. Es wird das Modell des Prüfgegenstandes erstellt. Auf jeden Schritt des iterativen Vorgangs wird die Schallausbreitung durch das Modell simuliert und die Laufzeiten von jedem Pixel des Raums bis zu jedem der Empfänger $E_1$ bis $E_N$ (Empfänger 120) sowie vom Sender S (Sender 140) bis zu diesem Pixel bestimmt. Unter anderem werden von der Anisotropie, Inhomogenität und der Bauteilgeometrie verursachte Schallbrechungsphänomene hierbei berücksichtigt. Die ermittelten Laufzeiten werden bei der Rekonstruktion des Sektor-B-Bildes genutzt, wobei die vorher aufgenommenen Ultraschallsignale in rekonstruierten Raum zurückpropagiert oder zurückprojiziert werden. Auf jeden Iterationsschritt hin wird die rekonstruierte Anzeige hinsichtlich des Schallsenders S (Sender 140) bzw. der Rückwand 130' (R) anvisiert. Es wird so der Funktionswert der Funktion $f_{DS}$ bestimmt und mit dem Ergebnis der vorherigen Iteration verglichen. Entsprechend dem Verhältnis der $f_{DS}$-Werte aus aufeinanderfolgenden Iterationen wird die Argumentnorm a, b oder a und b angepasst und so das Modell des Prüfobjekts 110 korrigiert. Die gesamte Prozedur wird anschließend wiederholt, sofern nicht die Bewertung der Rückprojektion anzeigt, dass das Ergebnis eine ausreichende Genauigkeit oder eine andere vorbestimmte Bedingung erfüllt.

Der Iterationsprozess wird also beispielsweise abgebrochen, wenn der Unterschied der Funktionswerte bei zwei aufeinanderfolgenden Iterationen kleiner als die vorgenommen Toleranz ε ist, also das lokale oder absolute Funktionsextremum erreicht wird.

Als Ergebnis des iterativen Vorgangs kommt die ermittelte Menge von Argumenten der $f_{DS}$-Funktion heraus. Das heißt, es werden Parameter ermittelt, welche die Anisotropie und/oder die Inhomogenität des Prüfobjekts 110 beschreiben. Damit erreicht die $f_{DS}$-Funktion ihren optimalen Wert, wie dies bereits im Zusammenhang mit den Fig. 7 und 8 erläutert wurde. In Fig. 8 oben befindet sich die Anzeige S*, die in dem rekonstruierten Bild dem Sender S entspricht, an der richtigen Position, der Soll-Position, wobei diese Anzeige fokussiert ist, also eine kleine Unschärfe bzw. minimale Unschärfe und eine große bzw. maximale Amplitude aufweist. Anders ausgedrückt steigt bei der in Fig. 8 gezeigten Iteration mit jedem Iterationsschritt die Amplitude A, während die Positionsabweichung L und die Unschärfe der Anzeige U kleiner werden. Im Idealfall der abschließenden m-ten Iteration ist so die Amplitude maximal, die Positionsabweichung L verschwindend und die Unschärfe U minimal.

Wie bereits zuvor erläutert wurde, kann hierbei selbstverständlich auch als Referenz die Anzeige R* der Rückwandfläche R des Prüfobjekts 110 dienen, wie dies in der unteren Teilabbildung von Fig. 8 auch illustriert ist.

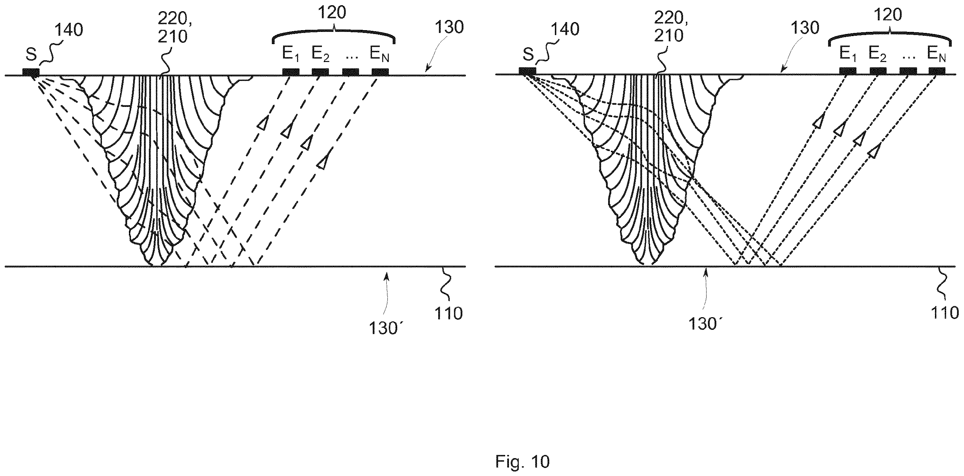

Da bei konstanter Messanordnung nur ein Teil des Prüfobjekts beschallt wird, kann zur Ermittlung der Eigenschaften des gesamten Volumens die Reihe von Empfängern 120 verschoben werden, wie dies beispielsweise in Fig. 10 illustriert ist. Fig. 10 zeigt so eine mögliche Messanordnung zur Erstellung eines Compound-B-Bildes. Alternativ oder zusätzlich kann auch der Abstand zwischen den Empfängern $E_1$ - $E_N$ variiert werden.

Fig. 10 zeigt in der linken Hälfte eine Anordnung mit einem Sender 140 (Sender S) und eine Mehrzahl von Empfängern 120 ($E_1$ bis $E_N$), die auf der Oberfläche 130 des Prüfobjekts 110 angeordnet sind. Der zu untersuchende Bereich 220 in Form der Schweißnaht 210 liegt hierbei zwischen den Empfängern 120 und dem Sender 140. Mithilfe der links in Fig. 10 dargestellten Situation kann so beispielsweise ein erster Satz von entsprechenden Zeitspuren erfasst bzw. bestimmt werden, der dann im Rahmen eines Ausführungsbeispiels eines Verfahrens zum Prüfen des zu untersuchenden Objekts 110 verwendet werden kann.

Um jedoch die Eigenschaften gegebenenfalls genauer bestimmen zu können, um beispielsweise den zu untersuchenden Bereich 220 senkrecht oder parallel zu der Oberfläche 130 auszudehnen, kann es gegebenenfalls ratsam sein, den Abstand zwischen den Empfängern 120 und dem Sender 140 zu verändern bzw. eine entsprechende Position des Senders 140 oder der Empfänger 120 zu verändern. Genau dies ist in der rechten Teilabbildung von Fig. 10 gezeigt. Als Folge verändern sich, wie dies in Fig. 10 links und rechts auch schematisch dargestellt ist, die Ausbreitungswege von dem Sender 140 zu den einzelnen Empfängern 120. Hierdurch kann der zu untersuchende Bereich 220, also im konkreten Fall die Schweißnaht 210, durch unterschiedliche Ausbreitungswege genauer untersucht werden. Es ist so möglich, mithilfe von unterschiedlichen Messpositionen mehrere Sätze von entsprechenden Zeitspuren zu sammeln und diese im Rahmen des Verfahrens zum Prüfen des zu untersuchenden Objekts 110 heranzuziehen. Die für jede Messposition rekonstruierten Sektor-Bilder können so miteinander in einem Verbundbild, einem sogenannten Compound-B-Bild, überlagert werden. Während des Bestimmungsvorgangs kann dieses B-Bild dann analysiert werden. Hierdurch kann zwar einerseits auch die Genauigkeit erhöht werden, es ist jedoch auch mit einem erhöhten Rechenaufwand zu rechnen.

Die Anzahl der Ultraschallquellen (Sender 140) bzw. die Anzahl der analysierten Anzeigen in dem rekonstruierten Bild kann auch größer als 1 sein. Die Anzahl der Empfänger sowie ihrer Anordnung ist grundsätzlich frei wählbar, also nicht festgeregelt. Jede Hinzunahme erhöht zwar grundsätzlich die Rechenzeit, kann jedoch auch zu einer Verbesserung der Redundanz und damit der Qualität des Verfahrens beitragen. Als eine Menge von Sendern kann auch eine Variation eines der Wandler betrachtet werden, in welchen er aufeinanderfolgend platziert wird, wie dies in Fig. 10 beispielsweise angedeutet wird. Hierbei ist selbstverständlich der Zeitpunkt der Abtastung des Prüfobjekts 110 relevant bezogen auf die individuellen Positionen der Sender-/Empfangs-Module, wenn also der entsprechende Sender- bzw. Empfangsvorgang erfolgt.

Zur Anregung und zum Empfang der akustischen Wellen können Ultraschallwandler unterschiedlicher Konstruktion und Wirkungsart verwendet werden. So kann beispielsweise ein Einzelschwinger, ein Gruppenstrahler, ein EMUS-Prüfkopf (elektromagnetisch angeregter Ultraschall), eine Leistungsschallsonotrode, ein Schwingspulenerreger, ein Laserstrahl und andere Techniken eingesetzt werden. So kann selbstverständlich auch eine Kombination aus verschiedenen Wandlern verwendet werden. So ist grundsätzlich die Anzahl und Art sowie die Frequenz, das Spektrum und andere physikalische Parameter eins oder mehrere Sender 140 sowie der entsprechende Empfänger 120 sowie der Abstand zwischen diesen nicht spezifiziert. Ausführungsbeispiele können so unabhängig von einer konkreten hier beschriebenen Ausführung eines solchen Sensorsystems implementiert werden.

Selbstverständlich kann ein Ausführungsbeispiel nicht nur im Zweidimensionalen eingesetzt werden, sondern selbstverständlich auch zur dreidimensionalen Modellierung. Die entsprechenden Formulierungen sind in diesem Fall auf die dritte Dimension zu erweitern. Damit kann die Verteilung der akustischen Eigenschaften sowie die Struktur auch im dreidimensionalen Volumen ermittelt werden. Selbstverständlich kann dabei auch eine nichteindimensionale Anordnung vom Empfänger 120 entlang einer Linie ratsam oder sogar erforderlich sein. So können die Empfänger 120 in einem solchen Fall auch im Rahmen einer zweidimensionalen Anordnung auf der Oberfläche 130 des Objekts 110 angeordnet sein. Die beschriebene Prüftechnik kann so die Ermittlung der Anisotropie und Inhomogenität des Prüfobjekts 110 auf zerstörungsfreie Weise ermöglichen.

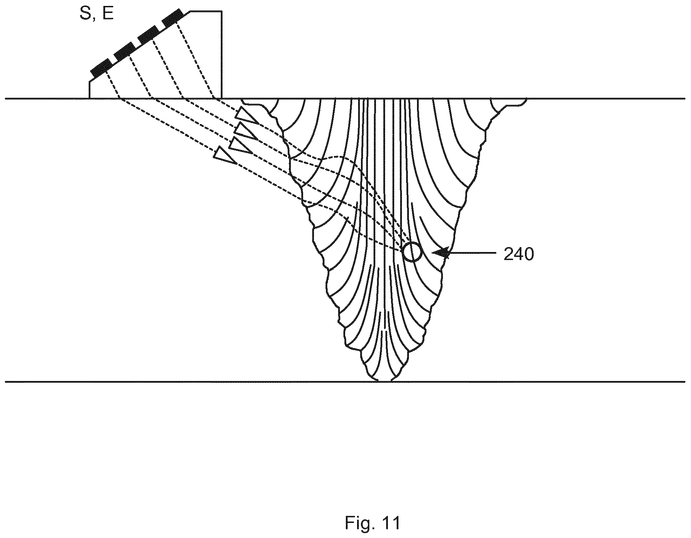

Konventionelle, wie dies beispielsweise auch in Fig. 11 dargestellt ist, wird ein künstlicher Reflektor 240 in einen entsprechenden Prüfkörper eingebracht, wobei dann gegebenenfalls unter Verwendung einer iterativen Bestimmung unbekannte Eigenschaften des anisotropen inhomogenen Mediums erfolgen können. Hierbei wird der künstliche Reflektor 240 als bekannte Struktur verwendet. Konventionell basiert dieses Konzept damit auf der Verwendung eines Referenzkörpers, der auch als Vergleichskörper oder Justierkörper bezeichnet wird und in einer vergleichbaren Art und Weise hergestellt wird und damit dieselbe oder sehr ähnliche Anisotropie und Inhomogenität besitzt, wie das später zu prüfende Objekt. In diesem Referenzkörper ist als der künstliche Referenzreflektor 240 eingebracht, dessen Lage und größer damit bekannt sind.

Die Ermittlung der unbekannten elastischen Eigenschaften erfolgt dann anhand dieses Vergleichskörpers oder Justierkörpers. Die Echoanzeige dieses künstlichen Reflektors dient dann als Referenzanzeige.

Die ermittelten Eigenschaften dieses Justierkörpers werden dann auf das eigentliche Prüfobjekt übertragen unter der Annahme, dass die Anisotropie und Inhomogenität des Prüfgegenstands unverändert zu dem betreffenden Justierkörper ist. Diese Annahme beschränkt den praktischen Nutzwert dieser Prüftechnik in erheblichem Maße, da grundsätzlich ein entsprechender Prüfkörper hergestellt und vermessen werden muss. Selbstverständlich kann gerade bei sicherheitskritischen Anwendungen ein künstlicher Reflektor 240, dessen Position bekannt ist, nicht in das eigentliche, zu untersuchende Objekt 110 eingebracht werden.

Durch den Einsatz eines Ausführungsbeispiels, bei dem unmittelbar und damit referenzkörperfrei eine Bestimmung der Prüfobjekteigenschaften erzielt werden kann, kann so ein mögliche Bestimmungsfehler reduziert oder sogar ausgeschlossen werden, der infolge eines möglichen und a priori unbekannten Unterschiedes zwischen dem zu untersuchenden Gegenstand und dem Referenzkörper bestehen kann. So müssen bei der konventionellen Methode die Eigenschaften des Referenzkörpers den Eigenschaften des Prüfobjekts nachgebildet sein, was in der Praxis aber im Allgemeinen sehr schwierig selbst bei automatisierten Produktionslinien zu erzielen ist. So kann es möglich sein, eine Zuverlässigkeit der Bestimmung der Eigenschaften des zu untersuchenden Objekts 110 zu steigern.

Die prinzipielle Anordnung von dem Sender 140 und dem Empfänger 120 an dem Prüfobjekt 110 in Kombination mit der oben erwähnten iterativen Bestimmung des Modells ermöglicht es gerade, ein Ausführungsbeispiel unmittelbar ohne einen vorherigen Justier- oder Referenzkörper zu verwenden, an dem zu untersuchenden Objekt 110 einzusetzen. Ein solches Verfahren kann daher referenzkörperfrei umgesetzt werden.

Anregung und Empfang der Ultraschallwellen nach dem Sender-Empfänger-Prinzip kann es so erübrigen, einen möglichst ähnlichen Referenzkörper, Vergleichskörper oder Justierkörper bereitzustellen. Darüber hinaus kann es möglich sein, die Bestimmung der unbekannten Eigenschaften, so beispielsweise der Anisotropie und Inhomogenität, direkt an dem Prüfobjekt 110 zu bestimmen. Dadurch können die ermittelten Werte den tatsächlichen in aktueller Messposition gegebenenfalls besser entsprechen. Eine positionsabhängige Variation der elastischen Eigenschaften sowie der Struktur, so beispielsweise der Inhomogenität, in dem Prüfobjekt können damit eine geringere Rolle spielen.

Durch den Einsatz eines Ausführungsbeispiels kann es möglich sein, einen Kompromiss aus Sicherheit, Genauigkeit, Schnelligkeit und Einfachheit der Anwendbarkeit eines solchen Verfahrens zum Prüfen eines zu untersuchenden Objektes 110 zu verbessern.

Die in der vorstehenden Beschreibung, den nachfolgenden Ansprüchen und den beigefügten Figuren offenbarten Merkmale können sowohl einzeln wie auch in beliebiger Kombination für die Verwirklichung eines Ausführungsbeispiels in ihren verschiedenen Ausgestaltungen von Bedeutung sein und implementiert werden.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-Ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einer programmierbaren Hardwarekomponente derart zusammenwirken können oder zusammenwirken, dass das jeweilige Verfahren durchgeführt wird.

Eine programmierbare Hardwarekomponente kann durch einen Prozessor, einen Computerprozessor (CPU = Central Processing Unit), einen Grafikprozessor (GPU = Graphics Processing Unit), einen Computer, ein Computersystem, einen anwendungsspezifischen integrierten Schaltkreis (ASIC = Application-Specific Integrated Circuit), einen integrierten Schaltkreis (IC = Integrated Circuit), ein Ein-Chip-System (SOC = System on Chip), ein programmierbares Logikelement oder ein feldprogrammierbares Gatterarray mit einem Mikroprozessor (FPGA = Field Programmable Gate Array) gebildet sein.

Das digitale Speichermedium kann daher maschinen- oder computerlesbar sein. Manche Ausführungsbeispiele umfassen also einen Datenträger, der elektronisch lesbare Steuersignale aufweist, die in der Lage sind, mit einem programmierbaren Computersystem oder einer programmierbare Hardwarekomponente derart zusammenzuwirken, dass eines der hierin beschriebenen Verfahren durchgeführt wird. Ein Ausführungsbeispiel ist somit ein Datenträger (oder ein digitales Speichermedium oder ein computerlesbares Medium), auf dem das Programm zum Durchführen eines der hierin beschriebenen Verfahren aufgezeichnet ist.

Allgemein können Ausführungsbeispiele der vorliegenden Erfindung als Programm, Firmware, Computerprogramm oder Computerprogrammprodukt mit einem Programmcode oder als Daten implementiert sein, wobei der Programmcode oder die Daten dahin gehend wirksam ist bzw. sind, eines der Verfahren durchzuführen, wenn das Programm auf einem Prozessor oder einer programmierbaren Hardwarekomponente abläuft. Der Programmcode oder die Daten kann bzw. können beispielsweise auch auf einem maschinenlesbaren Träger oder Datenträger gespeichert sein. Der Programmcode oder die Daten können unter anderem als Quellcode, Maschinencode oder Bytecode sowie als anderer Zwischencode vorliegen.

Ein weiteres Ausführungsbeispiel ist ferner ein Datenstrom, eine Signalfolge oder eine Sequenz von Signalen, der bzw. die das Programm zum Durchführen eines der hierin beschriebenen Verfahren darstellt bzw. darstellen. Der Datenstrom, die Signalfolge oder die Sequenz von Signalen kann bzw. können beispielsweise dahin gehend konfiguriert sein, um über eine Datenkommunikationsverbindung, beispielsweise über das Internet oder ein anderes Netzwerk, transferiert zu werden. Ausführungsbeispiele sind so auch Daten repräsentierende Signalfolgen, die für eine Übersendung über ein Netzwerk oder eine Datenkommunikationsverbindung geeignet sind, wobei die Daten das Programm darstellen.

Ein Programm gemäß einem Ausführungsbeispiel kann eines der Verfahren während seiner Durchführung beispielsweise dadurch umsetzen, dass dieses Speicherstellen ausliest oder in diese ein Datum oder mehrere Daten hinein schreibt, wodurch gegebenenfalls Schaltvorgänge oder andere Vorgänge in Transistorstrukturen, in Verstärkerstrukturen oder in anderen elektrischen, optischen, magnetischen oder nach einem anderen Funktionsprinzip arbeitenden Bauteile hervorgerufen werden. Entsprechend können durch ein Auslesen einer Speicherstelle Daten, Werte, Sensorwerte oder andere Informationen von einem Programm erfasst, bestimmt oder gemessen werden. Ein Programm kann daher durch ein Auslesen von einer oder mehreren Speicherstellen Größen, Werte, Messgrößen und andere Informationen erfassen, bestimmen oder messen, sowie durch ein Schreiben in eine oder mehrere Speicherstellen eine Aktion bewirken, veranlassen oder durchführen sowie andere Geräte, Maschinen und Komponenten ansteuern.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

**Patentansprüche**

1. Verfahren zum Prüfen eines zu untersuchenden Objekts (110), umfassend:

   Bereitstellen (P100) wenigstens eines Satzes von akustisch erfassten Zeitsignalen jeweils bezogen auf einen Ausbreitungsweg von einem gemeinsamen Sender (140) zu einer Mehrzahl von Empfängern (120), wobei der Ausbreitungsweg wenigstens teilweise durch das Objekt (110) verläuft und der Sender (140) von den Empfängern (120) beabstandet angeordnet ist;
   Initialisieren (P110) eines Modells des Objekts (110), wobei das Modell räumlich veränderliche elastische Eigenschaften des Objekts (110) umfasst;
   Rückprojizieren und Summieren (P120) der Zeitsignale ausgehend von den Positionen der Mehrzahl der Empfänger (120) in ein virtuelles Objekt basierend auf dem Modell;
   Bewerten der Rückprojektion (P130); und
   Anpassen (P140) des Modells des Objekts (110) basierend auf der Bewertung der Rückprojektion,
   wobei das Verfahren referenzkörperfrei ist,

**dadurch gekennzeichnet, dass**
das Bewerten (P130) der Rückprojektion ein Vergleichen einer Position des Senders (140) mit einer rückprojizierten Position des Senders umfasst, die basierend auf den rückprojizierten Zeitsignalen bestimmt wurde.

2. Verfahren nach Anspruch 1, bei dem das Objekt (110) einen zu untersuchenden Bereich (220) aufweist, und wobei der zu untersuchende Bereich entlang einer Richtung an der Oberfläche (130) des Objekts (110) zwischen dem Sender (140) und der Mehrzahl von Empfängern (120) angeordnet ist.

3. Verfahren nach einem der vorhergehenden Ansprüche, das ein iteratives Rückprojizieren (P120), Bewerten (P130) und Anpassen (P140) des Modells umfasst, wenn die Bewertung eine vorbestimmte Bedingung nicht erfüllt.

4. Verfahren nach einem der vorhergehenden Ansprüche, bei dem das Bewerten (P130) der Rückprojektion ein Vergleichen einer Position einer bekannten Außenkante, einer bekannten Außenfläche (130), eines Konstruktionsmerkmals und/oder einer Struktur des Objekts (110) mit einer Position der Außenkante, der Außenfläche, des Konstruktionsmerkmals bzw. der Struktur bestimmt basierend auf den rückprojizierten Zeitsignalen umfasst.

5. Verfahren nach einem der vorhergehenden Ansprüche, bei dem das Bewerten (P130) der Rückprojektion ein Bewerten einer Amplitude und/oder einer Schärfe umfasst.

6. Verfahren nach einem der vorhergehenden Ansprüche, bei dem das Bewerten (P130) der Rückprojektion basierend auf einer Funktion, die auf einer Abweichung einer Position bestimmt basierend auf den rückprojizierten Zeitsignalen von einer bekannten Position, einer Amplitude an der rückprojizierten Position oder in einer Umgebung der rückprojizierten Position und/oder einer Unschärfe in der Umgebung der rückprojizierten Position erfolgt.

7. Verfahren nach Anspruch 6, bei dem das Bewerten (P130) der Rückprojektion auf Basis von Amplitudenwerten in der Umgebung der Position bestimmt basierend auf den rückprojizierten Zeitsignalen erfolgt, wobei nur Amplitudenwerte berücksichtigt werden, die wenigstens einem Amplitudenschwellenwert entsprechen.

8. Verfahren nach einem der vorhergehenden Ansprüche, bei dem das Rückprojizieren (P120) der Zeitsignale ein Berücksichtigen von Wellenumwandlungseffekten umfasst.

9. Verfahren nach einem der vorhergehenden Ansprüche, bei dem eine Mehrzahl von Sätzen von akustisch erfassten Zeitsignalen bereitgestellt werden, wobei jeder Satz von Zeitsignalen wenigstens einer unterschiedlichen gemeinsamen Position des Senders bezogen auf die Positionen der Mehrzahl von Empfängern (120) entspricht, und bei dem das Rückprojizieren (P120) das Rückprojizieren der Zeitsignale von den Sätzen der Zeitsignale von den jeweiligen Positionen der Empfänger (120) umfasst.

10. Verfahren nach einem der vorhergehenden Ansprüche, bei dem das Bereitstellen (P100) des wenigstens einen Satzes von akustisch erfassten Zeitsignalen das Erfassen der akustischen Zeitsignale auf ein Aussenden eines Signals durch den Sender hin umfasst.

11. Prüfsystem (100) zum Prüfen eines Objekts (110), mit folgenden Merkmalen:

einer Mehrzahl von Empfängern (120) für akustische Signale, die ausgebildet sind, um mittelbar oder unmittelbar auf einer Oberfläche (130) des Objekts (110) aufbringbar zu sein;
einem Sender (140), der ausgebildet ist, um mittelbar oder unmittelbar auf der Oberfläche (130) des Objekts (110) aufbringbar zu sein und ein akustisches Signal in das Objekt (110) so einzuleiten, dass ein Ausbreitungsweg zu den Empfängern (120) wenigstens teilweise durch das Objekt (110) verläuft;
einer Steuerschaltung (150), die ausgebildet ist, um wenigstens einen Satz von akustischen Zeitsignalen jeweils bezogen auf einen Ausbreitungsweg von dem Sender (140) zu den Empfängern (120) zu erfassen, um ein Modell des Objekts zu initialisieren, das räumlich veränderliche elastische Eigenschaften des Objekts (110) umfasst, um die Zeitsignale ausgehend von den Positionen der Mehrzahl der Empfänger (120) in ein virtuelles Objekt basierend auf dem Modell zurück zu projizieren und zu summieren, die Rückprojektion zu bewerten und um das Modell des Objekts referenzkörperfrei basierend auf der Bewertung anzupassen,
**dadurch gekennzeichnet, dass**
die Steuerschaltung (150) ausgebildet ist, die Rückprojektion basierend auf einem ein Vergleich einer Position des Senders (140) mit einer rückprojizierten Position des Senders zu bewerten, die basierend auf den rückprojizierten Zeitsignalen bestimmt wurde.

**12.** Prüfsystem (100) gemäß Anspruch 11, bei dem die Mehrzahl von Empfängern (120) an einem ersten Prüfkopf (170) angeordnet sind, und bei dem der Sender (140) an einem zweiten Prüfkopf (180) angeordnet ist, wobei die Prüfköpfe (170, 180) ausgebildet sind, um auf der Oberfläche (130) des Objekts (100) angeordnet zu werden.

**13.** Programm mit einem Programmcode umfassend Befehle, die bewirken, dass das Prüfsystem des Anspruchs 11 die Verfahrensschritte nach einem der Ansprüche 1 bis 10 durchführt, wenn das Programm auf einer programmierbaren Hardwarekomponente abläuft.

**Claims**

**1.** A method of testing an object (110) to be examined, comprising:

providing (P100) at least one set of acoustically detected time signals, each related to a propagation path from a common transmitter (140) to a plurality of receivers (120), wherein the propagation path passes at least partially through the object (110) and the transmitter (140) is disposed spaced from the receivers (120);
initializing (P110) a model of the object (110), the model comprising spatially variable elastic properties of the object (110);
backprojecting and summing (P120) the time signals starting from the positions of the plurality of receivers (120) into a virtual object based on the model;
evaluating the backprojection (P130); and
adjusting (P140) the model of the object (110) based on the evaluation of the backprojection,
wherein the method is free of reference bodies,

**characterized in that**
evaluating (P130) the backprojection comprises comparing a position of the transmitter (140) to a backprojected position of the transmitter which has been determined based on the backprojected time signals.

**2.** The method of claim 1, the object (110) having an area (220) to be examined, and wherein the area to be examined is disposed along a direction at the surface (130) of the object (110) between the transmitter (140) and the plurality of receivers (120).

**3.** The method of any of the preceding claims, comprising iterative backprojecting (P120), evaluating (P130) and adjusting (P140) the model when the evaluation does not satisfy a predetermined condition.

**4.** The method of any of the preceding claims, wherein evaluating (P130) the backprojection comprises comparing a position of a known outer edge, a known exterior surface (130), a design feature and/or a structure of the object (110) to a position of the outer edge, the exterior surface, the design feature and/or the structure determined based on the backprojected time signals.

**5.** The method of any of the preceding claims, wherein evaluating (P130) the backprojection comprises evaluating an amplitude and/or a sharpness.

**6.** The method of any of the preceding claims, wherein evaluating (P130) the backprojection takes place based on a function based on a deviation of a position determined based on the backprojected time signals from a known position, an amplitude at the backprojected position or in an environment of the backprojected position and/or an unsharpness in the environment of the backprojected position.

**7.** The method of claim 6, wherein evaluating (P130) the backprojection takes place on the basis of amplitude values in the environment of the position determined based on the backprojected time signals, wherein only amplitude values corresponding to at least one amplitude threshold value are taken into account.

**8.** The method of any of the preceding claims, wherein backprojecting (P120) the time signals comprises taking into account wave conversion effects.

**9.** The method of any of the preceding claims, wherein a plurality of sets of acoustically detected time signals are provided, each set of time signals corresponding to at least one different common position of the transmitter related to the positions of the plurality of receivers (120), and wherein backprojecting (P120) comprises backprojecting the time signals of the sets of time signals from the respective positions of the receivers (120).

10. The method of any of the preceding claims, wherein providing (P100) the at least one set of acoustically detected time signals comprises detecting the acoustic time signals upon emission of a signal by the transmitter.

11. A testing system (100) for testing an object (110), having the following features:

a plurality of receivers (120) for acoustic signals, configured to be applicable indirectly or directly to a surface (130) of the object (110);
a transmitter (140), configured to be applicable indirectly or directly to the surface (130) of the object (110) and to introduce an acoustic signal into the object (110) such that a propagation path to the receivers (120) passes at least partially through the object (110);
a control circuit (150), configured to detect at least one set of acoustic time signals, each related to a propagation path from the transmitter (140) to the receivers (120), to initialize a model of the object comprising spatially variable elastic properties of the object (110), to backproject and sum the time signals starting from the positions of the plurality of receivers (120) into a virtual object based on the model, to evaluate the backprojection, and to adjust the model of the object free of reference bodies based on the evaluation,
**characterized in that**
the control circuit (150) is configured to evaluate the backprojection based on a comparison of a position of the transmitter (140) to a backprojected position of the transmitter which has been determined based on the backprojected time signals.

12. The testing system (100) of claim 11, wherein the plurality of receivers (120) are disposed at a first probe (170), and wherein the transmitter (140) is disposed at a second probe (180), the probes (170, 180) being configured to be disposed on the surface (130) of the object (100).

13. A program having a program code: comprising commands causing the testing system of claim 11 to perform the method steps of any of claims 1 to 10 when the program is executed on a programmable hardware component.

**Revendications**

1. Procédé pour contrôler un objet (110) à examiner, comprenant :

fournir (P100) au moins un ensemble de signaux horaires détectés de façon acoustique, chaque fois par rapport à un trajet de propagation à partir d'un émetteur (140) commun à une pluralité de récepteurs (120), le trajet de propagation passant au moins partiellement à travers l'objet (110) et l'émetteur (140) étant disposé à distance des récepteurs (120) ;
initialiser (P110) un modèle de l'objet (110), le modèle comprenant des propriétés élastiques de l'objet (110) spatialement variables ;
rétroprojeter et sommer (P120) les signaux horaires à partir des positions de la pluralité de récepteurs (120) dans un objet virtuel sur la base du modèle ;
évaluer la rétroprojection (P130) ; et
adapter (P140) le modèle de l'objet (110) sur la base de l'évaluation de la rétroprojection,
le procédé étant exempt de corps de référence,

**caractérisé en ce que**
l'évaluation (P130) de la rétroprojection comprend une comparaison d'une position de l'émetteur (140) avec une position rétroprojetée de l'émetteur déterminée sur la base des signaux horaires rétroprojetés.

2. Procédé selon la revendication 1, l'objet (110) présentant une région (220) à examiner, et la région à examiner étant disposée le long d'une direction à la surface (130) de l'objet (110) entre l'émetteur (140) et la pluralité de récepteurs (120).

3. Procédé selon l'une des revendications précédentes comprenant une rétroprojection itérative (P120), une évaluation (P130) et une adaptation (P140) du modèle lorsque l'évaluation ne satisfait pas à une condition prédéterminée.

4. Procédé selon l'une des revendications précédentes, l'évaluation (P130) de la rétroprojection comprenant une comparaison d'une position d'un bord extérieur connu, d'une surface extérieure (130) connue, d'une caractéristique de construction et/ou d'une structure de l'objet (110) avec une position du bord extérieur, de la surface extérieure, de la caractéristique de construction respectivement de la structure déterminée sur la base des signaux horaires rétroprojetés.

5. Procédé selon l'une des revendications précédentes, l'évaluation (P130) de la rétroprojection comprenant une évaluation d'une amplitude et/ou d'une netteté.

6. Procédé selon l'une des revendications précédentes, l'évaluation (P130) de la rétroprojection étant effectuée sur la base d'une fonction basée sur une déviation d'une position déterminée sur la base des signaux horaires rétroprojetés à partir d'une position connue, d'une amplitude à la position rétroprojetée ou dans un environnement de la position rétroprojetée et/ou d'un flou dans l'environnement de la position rétroprojetée.

7. Procédé selon la revendication 6, l'évaluation (P130) de la rétroprojection étant effectuée sur la base des valeurs d'amplitude dans l'environnement de la position déterminée sur la base des signaux horaires rétroprojetés, seules les valeurs d'amplitude correspondant à au moins une valeur seuil d'amplitude étant prises en compte.

8. Procédé selon l'une des revendications précédentes, la rétroprojection (P120) des signaux horaires comprenant une prise en compte des effets de transformation d'ondes.

9. Procédé selon l'une des revendications précédentes, une pluralité d'ensembles de signaux horaires détectés de façon acoustique étant fournis, chaque ensemble de signaux horaires correspondant à au moins une position commune différente de l'émetteur par rapport aux positions de la pluralité de récepteurs (120), et la rétroprojection (P120) comprenant la rétroprojection des signaux horaires des ensembles de signaux horaires à partir des positions respectives des récepteurs (120).

10. Procédé selon l'une des revendications précédentes, la fourniture (P100) de l'au moins un ensemble de signaux horaires détectés de façon acoustique comprenant la détection des signaux horaires acoustiques lors d'une émission d'un signal par l'émetteur.

11. Système de contrôle (100) pour contrôler un objet (110), comprenant :

  une pluralité de récepteurs (120) de signaux acoustiques configurés pour être aptes à être appliqués indirectement ou directement sur une surface (130) de l'objet (110) ;
  un émetteur (140) configuré pour être apte à être appliqué indirectement ou directement sur la surface (130) de l'objet (110) et pour introduire un signal acoustique dans l'objet (110) de telle sorte qu'un trajet de propagation vers les récepteurs (120) passe au moins partiellement à travers l'objet (110) ;
  un circuit de commande (150) configuré pour détecter au moins un ensemble de signaux horaires acoustiques, chacun étant lié à un trajet de propagation à partir de l'émetteur (140) aux récepteurs (120), afin d'initialiser un modèle de l'objet comprenant des propriétés élastiques de l'objet (110) spatialement variables, de rétroprojeter et de sommer les signaux horaires à partir des positions de la pluralité de récepteurs (120) dans un objet virtuel sur la base du modèle, d'évaluer la rétroprojection et d'ajuster le modèle de l'objet sans corps de référence sur la base de l'évaluation,
  **caractérisé en ce que**
  le circuit de commande (150) est configuré pour évaluer la rétroprojection sur la base d'une comparaison d'une position de l'émetteur (140) avec une position rétroprojetée de l'émetteur déterminée sur la base des signaux horaires rétroprojetés.

12. Système de contrôle (100) selon la revendication 11, la pluralité de récepteurs (120) étant disposés sur une première sonde (170), et l'émetteur (140) étant disposé sur une deuxième sonde (180), les sondes (170, 180) étant configurées pour être disposées sur la surface (130) de l'objet (100).

13. Programme présentant un code de programme : comprenant des commandes faisant en sorte que le système de contrôle selon la revendication 11 réalise les étapes de procédé selon l'une des revendications 1 à 10 lorsque le programme est exécuté sur un composant matériel programmable.

Bereitstellen von Zeitsignalen  ⌇P100

Initialisieren des Modells  ⌇P110

Rückprojizieren der Zeitsignale  ⌇P120

Bewerten der Rückprojektion  ⌇P130

Anpassen des Modells  ⌇P140

Fig. 1

Fig. 2

Fig. 3

Fig. 4

EP 2 857 835 B1

Fig. 5

Fig. 6

EP 2 857 835 B1

Fig. 7a

Fig. 7b

Fig. 7c

Fig. 7d

Fig. 8

Fig. 9

Fig. 10

S, E

240

Fig. 11

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2013023987 A1

- US 20090083004 A1

**In der Beschreibung aufgeführte Nicht-Patentliteratur**

- **C. BOLLER et al.** Quantitative Ultrasonic Testing of Acoustically Anisotropic Materials With Verification on Austenitic and Dissimilar Weld Joints. *AIP Conference Proceedings,* 2012, vol. 1430, 881